(19) Europäisches Patentamt European Patent Office Office européen des brevets

(11) **EP 4 177 495 A1**

(12) **EUROPEAN PATENT APPLICATION**
published in accordance with Art. 153(4) EPC

(43) Date of publication:
**10.05.2023 Bulletin 2023/19**

(21) Application number: **21837999.8**

(22) Date of filing: **06.07.2021**

(51) International Patent Classification (IPC):
**F16H 49/00** (2006.01)          **B25J 15/08** (2006.01)
**F16H 21/50** (2006.01)

(52) Cooperative Patent Classification (CPC):
**B25J 15/08; F16H 21/50; F16H 49/00**

(86) International application number:
**PCT/JP2021/025462**

(87) International publication number:
**WO 2022/009881 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2020   JP 2020116652**

(71) Applicant: **OSAKA UNIVERSITY**
**Suita-shi**
**Osaka 565-0871 (JP)**

(72) Inventor: **KOYAMA, Keisuke**
**Suita-shi, Osaka 565-0871 (JP)**

(74) Representative: **Meissner Bolte Partnerschaft mbB**
**Patentanwälte Rechtsanwälte**
**Postfach 86 06 24**
**81633 München (DE)**

(54) **MAGNETIC GEAR, ACTUATOR UNIT HAVING THE SAME, AND LINK MECHANISM USING THE SAME**

(57) Provided is a magnetic gear which has a large transmission torque, stability, and a simple structure. A magnetic gear (30) includes: a first magnetic pole array (34) that includes first N poles (35) and first S poles (36) alternately arranged on an outer peripheral inclined surface (32) of a rotary disc (31); a second magnetic pole array (37) that includes second N poles (38) and second S poles (39) alternately arranged on the outer peripheral inclined surface (32), one of the second N poles (38) is positioned at a location corresponding to an intermediate position between a corresponding one of the first N poles (35) and a corresponding one of the second S poles (36) that are adjacent to each other.

FIG. 5

EP 4 177 495 A1

**Description**

Technical Field

The present invention relates to: a magnetic gear including a rotary disc having an outer peripheral surface provided with magnets; an actuator unit having the magnetic gear; and a link mechanism using the actuator unit.

Background Art

There has been known a magnetic gear including a rotary disc that has an outer peripheral surface on which magnetic poles having different poles are alternately magnetized at the same width and that is configured to rotate about a shaft of the rotary disc (Patent Literature 1).

There has been also known a magnetic gear including a truncated-cone-shaped base which is made of a non-magnetic material and which has a conical surface in which permanent magnets are buried so as to be arranged radially (Patent Literature 2).

Further, there has been known a magnetic gear that includes a rotary disc having an outer peripheral part where magnetic teeth each made of a permanent magnet in the form of a radial curved line (e.g., an involute curve) are provided such that N poles and S poles are arranged alternately and that is configured to transmit a torque by magnetic attraction and magnetic repulsion of the magnetic teeth (Patent Literature 3).

Moreover, there has been known a magnetic gear including a bevel rotary disc including (i) an N pole magnetic pole array that is constituted by a number of N poles arranged spirally at given intervals and that is arranged on an outer peripheral inclined surface of the bevel rotary disc and (ii) an S pole magnetic pole array that is constituted by a number of S poles arranged spirally at given intervals along the N pole magnetic pole array (Patent Literature 4).

Citation List

Patent Literature

Patent Literature 1
Japanese Patent Application Publication Tokukai No. 2018-189221 (Publication date: November 29, 2018)
Patent Literature 2
Specification of Japanese Patent No. 4885247 (Registered on December 16, 2011)
Patent Literature 3
Specification of Japanese Patent No. 3942101 (Registered on April 13, 2007)
Patent Literature 4
Specification of US Patent No. 10,224,798 (Registered on March 5, 2019)

Summary of Invention

Technical Problem

However, the magnetic gear disclosed in Patent Literature 1 involves the following problem. That is, the magnetic poles are engaged with each other in an area having a spot-like shape, i.e., a small area. Consequently, a maximum transmission torque is small.

The magnetic gear disclosed in Patent Literature 2 involves the following problem. That is, while magnetic poles of the magnetic gears face each other, the magnetic poles receive a large magnetic force and a large transmission torque acting thereon. Meanwhile, while the magnetic poles of the magnetic gears are shifted from each other in terms of angle, the magnetic poles receive a small magnetic force and a small transmission torque acting thereon. As a result, a maximum transmission torque varies depending on the rotational angles of the magnetic gears.

The magnetic gear disclosed in Patent Literature 3 involves the following problem. That is, the magnetic teeth of this magnetic gear are in the form of a radial curved line (e.g., an involute curve) so as to strengthen magnetic engagement, and therefore the magnetic teeth have a complicated structure.

The magnetic gear disclosed in Patent Literature 4 involves the following problem. That is, the magnetic teeth of the magnetic gear are constituted by a large number of N poles and a large number of S poles that are spirally arranged, and therefore the magnetic gear has a large number of magnetic poles configured in a complicated manner.

An aspect of the present invention has an object to provide: a magnetic gear which has a large maximum transmission torque, stability, and a simple structure; an actuator unit having the magnetic gear; and a link mechanism using the actuator unit.

Solution to Problem

In order to attain the object, a magnetic gear in accordance with an aspect of the present invention includes: a first magnetic pole array that includes first N poles and first S poles alternately arranged at given intervals along a circumferential direction of an outer peripheral surface of a rotary disc; and a second magnetic pole array that is arranged adjacent to the first magnetic pole array along the circumferential direction and that includes second N poles and second S poles alternately arranged at given intervals, one of the second N poles of the second magnetic pole array being positioned at a location corresponding to an intermediate position between a corresponding one of the first N poles and a corresponding one of the first S poles of the first magnetic pole array, the corresponding one of the first N poles and the corresponding one of the first S poles being adjacent to each other.
In order to attain the object, a magnetic gear in accordance with another aspect of the present invention includes: a plurality of magnet units arranged along a circumferential direction of an outer peripheral surface of a rotary disc, each of the plurality of magnet units including a plurality of magnets arranged in a Halbach array with which directions of magnetic poles are optimized so as to strengthen a magnetic field strength on an outer side of the outer peripheral surface.

Advantageous Effects of Invention

In accordance with an aspect of the present invention, it is possible to provide: a magnetic gear which has a large maximum transmission torque, stability, and a simple structure; an actuator unit having the magnetic gear; and a link mechanism using the actuator unit.

Brief Description of Drawings

Fig. 1 is an image illustrating an appearance of a magnetic gear in accordance with Embodiment 1.
Fig. 2 is an elevational view of the magnetic gear.
Fig. 3 is a side view of the magnetic gear.
Fig. 4 is a view illustrating magnetic fields generated by magnetic pole arrays arranged on the magnetic gear.
Fig. 5 is a schematic view illustrating magnetic engagement of the magnetic gears.
Fig. 6 is an image of magnetic fields generated by the magnetic gear, as seen through a magnetic field observation sheet.
Fig. 7 is another image of the magnetic fields, as seen through the magnetic field observation sheet.
Fig. 8 is a graph illustrating a relation between a rotational angle of the magnetic gear and transmission torques given by a first magnetic pole array and a second magnetic pole array.
Fig. 9 is a graph illustrating a relation between a rotational angle of the magnetic gear and a maximum transmission torque.
Fig. 10 is a perspective view of a magnetic gear in accordance with Embodiment 2.
Fig. 11 is a side view of magnet units arranged on an outer peripheral inclined surface of the magnetic gear.
Fig. 12 is a view illustrating magnetic fields generated by a plurality of magnets arranged in a Halbach array on the magnetic gear.
Fig. 13 is a view illustrating magnetic fields generated by a plurality of magnets arranged in a magnetic gear in accordance with a comparative example.
Fig. 14 is an image illustrating an appearance of a multi-fingered hand in accordance with Embodiment 3.
Fig. 15 is a perspective view illustrating a configuration of an actuator unit included in the multi-fingered hand.
Fig. 16 is a perspective view illustrating a configuration of another actuator unit included in the multi-fingered hand.
Fig. 17 is a graph illustrating an angle response observed when the PD angle control for a DIP joint included in the actuator unit was conducted.
Fig. 18 is a graph illustrating an angular velocity response observed when the PD angle control for the DIP joint was conducted.
Fig. 19 is a graph illustrating an angle response observed when the PD angle control for a PIP joint included in the actuator unit was conducted.
Fig. 20 is a graph illustrating an angular velocity response observed when the PD angle control for the PIP joint was conducted.
Fig. 21 is a graph showing effects of a friction/cogging torque control for the PIP joint.

Fig. 22 is a view schematically illustrating a mechanism of a Maxwell model control for a first finger included in the multi-fingered hand.

Fig. 23 is a view illustrating, in time series, how the first finger of the multi-fingered hand controlled by the Maxwell model control carries out operation of catching a light-weight object.

Fig. 24 is a view illustrating, in time series, how a first finger of a multi-fingered hand controlled by a control mode in accordance with a comparative example carries out operation of catching a light-weight object.

Fig. 25 is a graph illustrating a relation between virtual spring reaction forces and periods of elapsed time, each of the virtual spring reaction forces acting on the first finger of the multi-fingered hand controlled by the Maxwell model control or the control mode in accordance with the comparative example.

Fig. 26 is a view schematically illustrating a first phase of operation of a multi-fingered hand in accordance with Embodiment 4.

Fig. 27 is a view schematically illustrating a second phase of the operation of the multi-fingered hand.

Fig. 28 is a view schematically illustrating a third phase of the operation of the multi-fingered hand.

Fig. 29 is an image illustrating a motion of the multi-fingered hand that is to grasp a thin plate-like object at a high speed.

Fig. 30 is an image illustrating a motion of the multi-fingered hand that has grasped the object at a high speed.

Fig. 31 is a view schematically illustrating a concept of a plastically deforming control mode of the multi-fingered hand.

Fig. 32 is a view schematically illustrating a concept of a series elastic actuator mode 1 of the multi-fingered hand.

Fig. 33 is an image illustrating a motion of the multi-fingered hand controlled by the first phase for laterally grasping an object on a desk at a high speed.

Fig. 34 is an image illustrating a motion of the multi-fingered hand controlled by the second phase for laterally grasping the object on the desk at a high speed.

Fig. 35 is an image illustrating a motion of the multi-fingered hand controlled by the third phase for laterally grasping the object on the desk at a high speed.

Fig. 36 is a view schematically illustrating a concept of a series elastic actuator mode 2 of the multi-fingered hand.

Fig. 37 is a view schematically illustrating a concept of a plastically deforming control mode of the multi-fingered hand.

Description of Embodiments

Embodiment 1

Configuration of Magnetic Gear 30

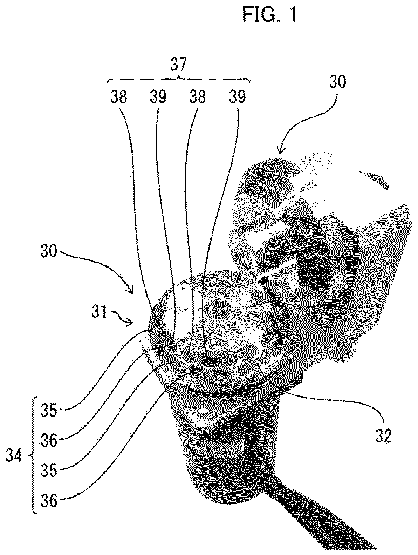

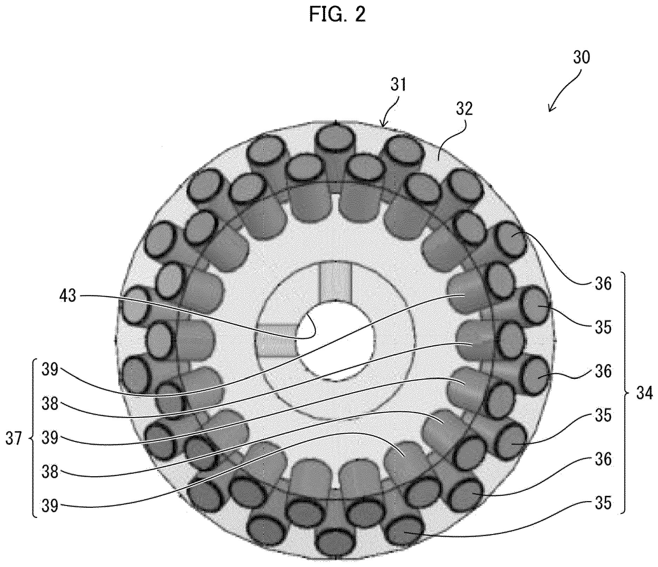

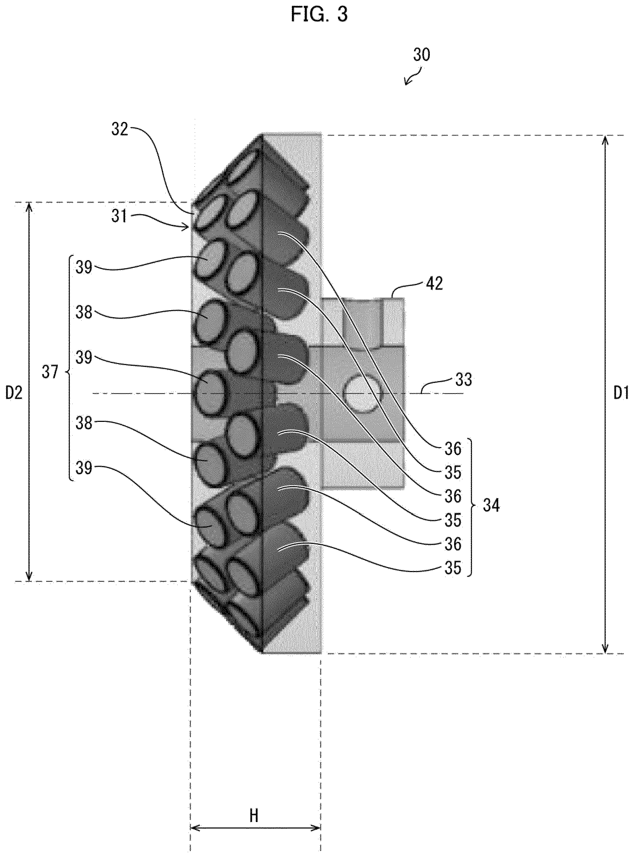

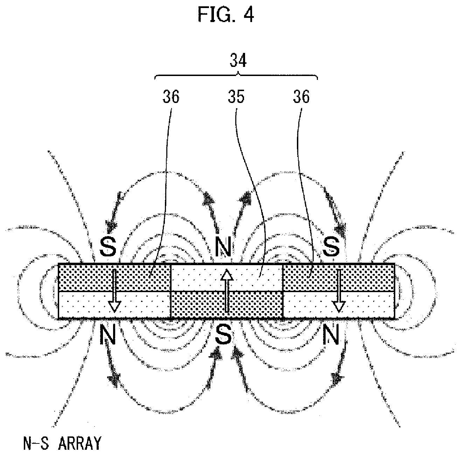

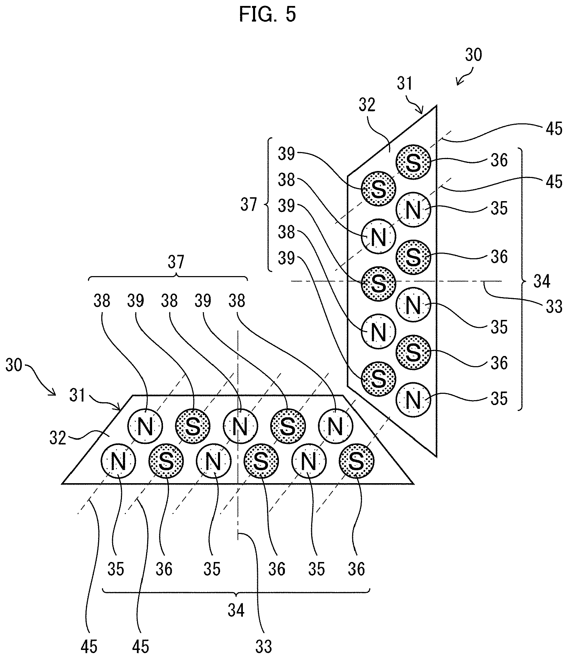

The following will give a detailed description of an embodiment of the present invention. Fig. 1 is an image illustrating an appearance of a magnetic gear 30 in accordance with Embodiment 1. Fig. 2 is an elevational view of the magnetic gear 30. Fig. 3 is a side view of the magnetic gear 30. Fig. 4 is a view illustrating magnetic fields generated by magnetic pole arrays arranged on the magnetic gear 30. Fig. 5 is a schematic view illustrating magnetic engagement of the magnetic gears 30.

The magnetic gear 30 is a bevel gear, and includes a rotary disc 31 that is in the form of a truncated cone and a shaft part 42. The rotary disc 31 includes (i) a first magnetic pole array 34 that includes first N poles 35 and first S poles 36 alternately arranged at given intervals along a circumferential direction of an outer peripheral inclined surface 32 (outer peripheral surface) of the rotary disc 31 and (ii) a second magnetic pole array 37 that is arranged adjacent to the first magnetic pole array 34 along the circumferential direction and that includes second N poles 38 and second S poles 39 alternately arranged at given intervals. One of the second N poles 38 of the second magnetic pole array 37 is positioned at a location corresponding to an intermediate position between a corresponding one of the first N poles 35 and a corresponding one of the second S poles 36 of the first magnetic pole array 34, the corresponding one of the first N poles 35 and the corresponding one of the second S poles 36 being adjacent to each other.

The first N poles 35, the first S poles 36, the second N poles 38, and the second S poles 39 each have a columnar shape, and are buried in the outer peripheral inclined surface 32 along their axial directions.

The rotary disc 31 is made of an aluminum material or a resin material. On the outer peripheral inclined surface 32 of the rotary disc 31 made of an aluminum material or a resin material, the first N poles 35, the first S poles 36, the second N poles 38, and the second S poles 39 are arranged in a discrete manner. With this, it is possible to reduce the weight of the magnetic gear 30.

Indicated herein is an example in which the magnetic gear 30 is a bevel gear. Alternatively, the magnetic gear 30 may be a spur gear.

A size of the rotary disc 31 of the magnetic gear 30 is as follows. That is, for example, the rotary disc 31 of the magnetic gear 30 has a diameter D1 = 22 mm, a height H = 5.5 mm, and a diameter D2 = 16 mm. The magnetic gear 30 has a weight of 6.8 gram, for example. The magnetic gear 30 has a moment of inertia of 1.6E-6 $kgfm^2$, according to calculation. A number of poles that indicates a total number of the first N poles 35 and the first S poles 36 of the first magnetic pole array 34 is 18, for example. A number of poles that indicates a total number of the second N poles 38 and the second S poles 39 of the second magnetic pole array 37 is also 18, for example. A step-out torque is 0.086 Nm (interval: approximately 0.4 mm), for example.

Each of the first N poles 35, the first S poles 36, the second N poles 38, and the second S poles 39 is made of a neodymium magnet having a diameter of 2 mm, for example.

The shaft part 42 has a shaft hole 43 having a diameter of 4 mm, for example.

A conventional magnetic gear (MagTran (registered trademark) FD22, FD22S available from FEC Corporation) in accordance with a comparative example has a diameter of 22 mm, a height of 12 mm, a weight of 21.6 gram, and a moment of inertia of 5.2E-6 kgfm$^2$. Further, in the conventional magnetic gear, the numbers of poles are 8 and 12, step-out torques are 0.06 Nm and 0.1 Nm (interval: 0.3 mm).

As discussed above, as compared to the conventional magnetic gear, the magnetic gear 30 in accordance with Embodiment 1 can reduce its size in height by half and also can drastically reduce the weight and the moment of inertia to approximately 69%. Thus, it is possible to provide a small, light, and high-torque magnetic gear that carries out orthogonal conversion of the rotating shaft.

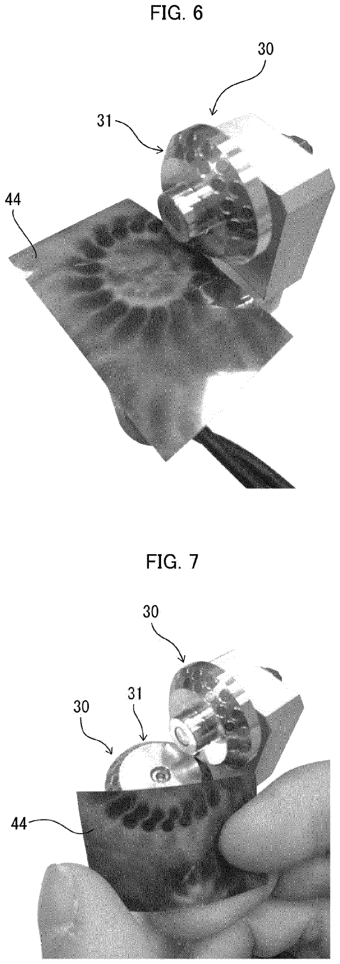

Fig. 6 is an image of magnetic fields generated by the magnetic gear 30, as seen through a magnetic field observation sheet 44. Fig. 7 is another image of the magnetic fields, as seen through the magnetic field observation sheet 44.

As shown in Fig. 5, the first N poles 35 and the second N poles 38 are arranged along a direction of diagonal lines 45 that intersect a rotating shaft 33 of the rotary disc 31. The first S poles 36 and the second S poles 39 are also arranged along the direction of the diagonal lines 45. Thus, the first N poles 35 and the second N poles 38, arranged along the direction of the diagonal lines 45, of the magnetic gear 30 attract first S poles 36 and second S poles 39, arranged along the direction of the diagonal lines 45, of a counterpart magnetic gear 30, and repel first N poles 35 and second N poles 38, arranged along the direction of the diagonal lines 45, of the counterpart magnetic gear 30. With this, the magnetic gear 30 is engaged with the counterpart magnetic gear 30.

The magnetic field observation sheet 44 includes iron sand enclosed therein. In the magnetic field observation sheet 44, portions corresponding to an N pole and an S pole are indicated in black. When the rotary disc 31 is seen through the magnetic field observation sheet 44, it can be confirmed that (i) magnetic fields are generated along the first N poles 35 and the second N poles 38 arranged along the direction of the diagonal lines 45 and (ii) magnetic fields are generated along the first S poles 36 and the second S poles 39 arranged along the direction of the diagonal lines 45, as shown in Figs. 6 and 7.

Operation of Magnetic Gear 30

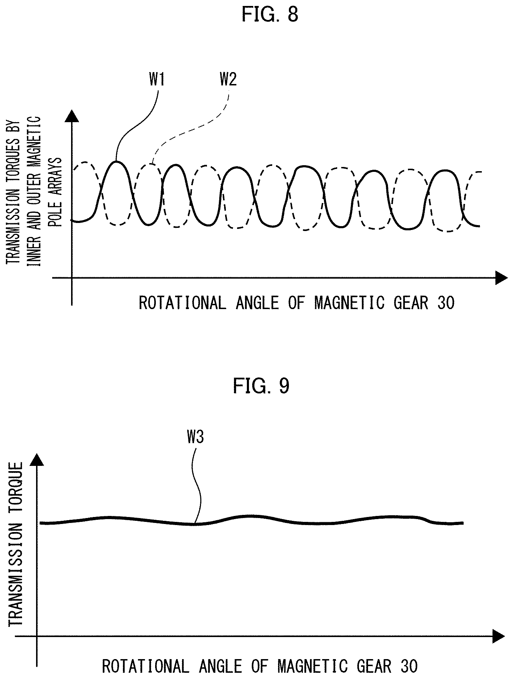

Fig. 8 is a graph illustrating a relation between a rotational angle of the magnetic gear 30 and transmission torques given by the first magnetic pole array 34 and the second magnetic pole array 37. Fig. 9 is a graph illustrating a relation between a rotational angle of the magnetic gear 30 and a maximum transmission torque.

In the rotary disc 31 of the magnetic gear 30, the first magnetic pole array 34 and the second magnetic pole array 37 are arranged along the circumferential direction of the outer peripheral inclined surface 32 such that their phases are shifted from each other. Further, the magnetic poles have no space therebetween along the circumferential direction of the outer peripheral inclined surface 32. Thus, as shown in Fig. 8, a complementary relation is established between the waveform W1, which indicates a transmission torque given by the first magnetic pole array 34, and the waveform W2, which indicates a transmission torque given by the second magnetic pole array 37. This yields a small variation in the waveform W3, which indicates a maximum transmission torque given by the first magnetic pole array 34 and the second magnetic pole array 37, as shown in Fig. 9.

Further, since the first N poles 35 and the first S poles 36 of the first magnetic pole array 34 and the second N poles 38 and the second S poles 39 of the second magnetic pole array 37 each have a small volume, the magnetic gear 30 is small and light in weight. Moreover, since the first N poles 35 and the first S poles 36 of the first magnetic pole array 34 and the second N poles 38 and the second S poles 39 of the second magnetic pole array 37 each have a columnar shape, processing for burying the magnetic poles in the outer peripheral inclined surface 32 of the rotary disc 31 is facilitated.

Effects of Embodiment 1

As described above, in accordance with Embodiment 1, one of the second N poles 38 of the second magnetic pole array 37 is positioned at a location corresponding to an intermediate position between a corresponding one of the first N poles 35 and a corresponding one of the first S poles 36 of the first magnetic pole array 34, the corresponding one of the first N poles 35 and the corresponding one of the first S poles 36 being adjacent to each other. Thus, each first N pole 35 and its corresponding second N pole 38 are arranged along the diagonal direction, and each first S pole 36 and its corresponding second S pole 39 are arranged along the diagonal direction. With this, the magnetic gear 30 is engaged with its counterpart magnetic gear 30. Consequently, the magnetic poles are engaged with each other in a larger engagement area, whereby a variation in the maximum transmission torque is reduced. As a result, it is possible to provide a magnetic gear 30 which has a large transmission torque, stability, and a simple structure.

The above-described magnetic gear disclosed in Patent Literature 1 is configured such that the magnetic poles having different poles are alternately magnetized at the same width on the outer peripheral surface of the rotary disc and adjacent ones of the magnetic poles have almost no space therebetween. Thus, magnetic poles of one magnetic gear are engaged with magnetic poles of a counterpart magnetic gear in an area having a spot-like shape, and thus the area where the magnetic poles are engaged with each other is small. As a result, the magnetic gear disclosed in Patent Literature 1 involves a problem of a large variation in the maximum transmission torque.

In the above-described magnetic gear in accordance with Patent Literature 2, the magnetic poles buried in the conical surface of the truncated-cone-shaped base which is made of a non-magnetic material have a space therebetween. While the magnetic poles of the magnetic gear face the magnetic poles of a counterpart magnetic gear, a magnetic force attracting each other is large. Meanwhile, while the magnetic poles of the magnetic gear are shifted from the magnetic poles of the counterpart magnetic gear in terms of the rotational angle, a magnetic force attracting each other is small. Thus, the magnetic gear disclosed in Patent Literature 2 involves a problem that a variation in the maximum transmission torque increases in accordance with the rotational angle.

In contrast, the magnetic gear 30 in accordance with Embodiment 1 is configured as below. That is, the first N poles 35 and the second N poles 38, arranged along the direction of the diagonal lines 45, of the magnetic gear 30 attract first S poles 36 and second S poles 39, arranged along the direction of the diagonal lines 45, of a counterpart magnetic gear 30, and repel first N poles 35 and second N poles 38, arranged along the direction of the diagonal lines 45, of the counterpart magnetic gear 30. With this, the magnetic gear 30 is engaged with the counterpart magnetic gear 30. Consequently, the magnetic poles are engaged with each other in a larger engagement area, whereby a variation in the maximum transmission torque is reduced.

Embodiment 2

The following will give a description of another embodiment of the present invention. For convenience of description, a member having a function identical to that of a member discussed in the foregoing embodiment is given an identical reference sign, and a description thereof is omitted.

Configuration of Magnetic Gear 30A

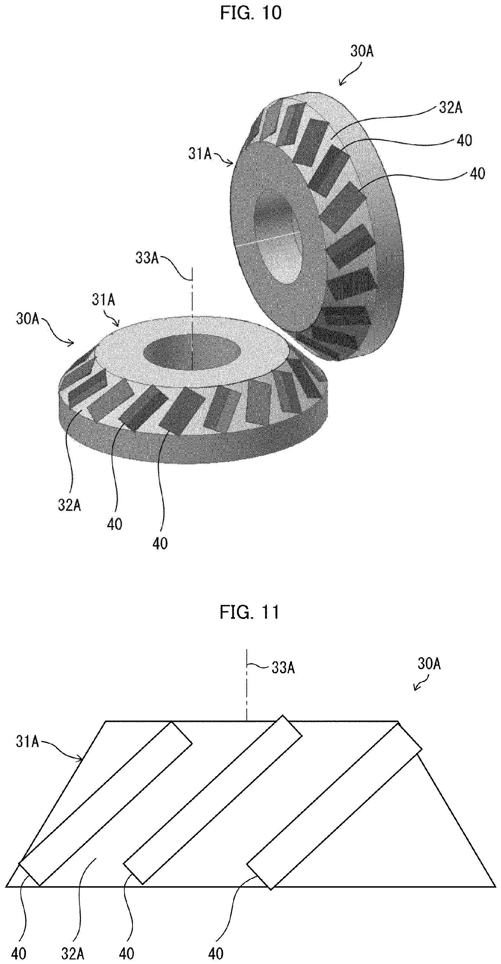

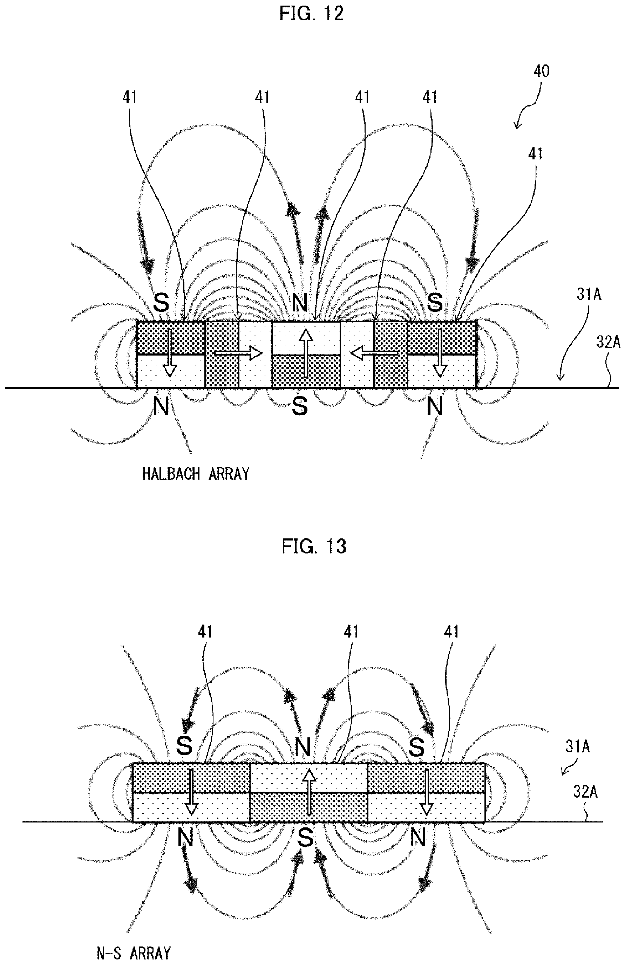

Fig. 10 is a perspective view of a magnetic gear 30A in accordance with Embodiment 2. Fig. 11 is a side view of magnet units 40 arranged on an outer peripheral inclined surface 32A of the magnetic gear 30A. Fig. 12 is a view illustrating magnetic fields generated by a plurality of magnets 41 arranged in a Halbach array on the magnetic gear 30A.

The magnetic gear 30A is a bevel gear, and includes a rotary disc 31A that is in the form of a truncated cone. The rotary disc 31A includes a plurality of magnet units 40 arranged along a circumferential direction of the outer peripheral inclined surface 32A (outer peripheral surface). Each magnet unit 40 includes a plurality of magnets 41 arranged in a Halbach array with which directions of the magnetic poles are optimized so as to maximize a magnetic field strength on an outer side of the outer peripheral inclined surface 32A.

Each magnet unit 40 is in the form of a flat rectangular parallelepiped, and is bonded to the outer peripheral inclined surface 32A.

The rotary disc 31A is made of an aluminum material or a resin material. The magnet units 40 are arranged, in a discrete manner, on the outer peripheral inclined surface 32A of the rotary disc 31A made of an aluminum material or a resin material. With this, it is possible to reduce the weight of the magnetic gear 30A.

Indicated herein is an example in which the magnetic gear 30A is a bevel gear. Alternatively, the magnetic gear 30A may be a spur gear.

The magnet units 40 are arranged (i) at certain intervals along the circumferential direction of the outer peripheral inclined surface 32A and (ii) along a diagonal direction with respect to a rotating shaft 33A of the rotary disc 31A.

Magnet Array in Magnet Unit 40 of Magnetic Gear 30A

Each magnet unit 40 includes, for example, five magnets 41 arranged in a single row of a Halbach array so as to be in contact with each other on the outer peripheral inclined surface 32A, as shown in Fig. 12. A magnet 41 at one end includes an N pole disposed on the side of the outer peripheral inclined surface 32A and an S pole disposed on the side opposite to the outer peripheral inclined surface 32A. A magnet 41 that is the second from the one end includes an S pole disposed on the side of the magnet 41 at the one end and an N pole disposed on the side opposite to the magnet 41 at the one end. A magnet 41 at the center includes an S pole disposed on the side of the outer peripheral inclined surface 32A and an N pole disposed on the side opposite to the outer peripheral inclined surface 32A. A magnet 41 that is the fourth from the one end includes an N pole disposed on the side of the magnet 41 at the center and an S pole disposed on the side opposite to the magnet 41 at the center. A magnet 41 at the other end includes an N pole disposed on the side of the outer peripheral inclined surface 32A and an S pole disposed on the side opposite to the outer peripheral inclined surface 32A.

In a case where the magnets 41 are arranged in a Halbach array in this manner, magnetic fields are concentrated on one side of the magnet unit 40, as shown in Fig. 12. Thus, it is possible to strengthen a magnetic field strength on a side of the magnet unit 40 which side is opposite to the outer peripheral inclined surface 32A. As a result, it is possible to increase the transmission torque of the magnetic gear 30A.

Fig. 13 is a view illustrating magnetic fields generated by a plurality of magnets 41 arranged in a magnetic gear in accordance with a comparative example.

This magnet unit includes three magnets 41 arranged in a single row of an N-S array so as to be in contact with each other on an outer peripheral inclined surface 32A. A magnet 41 at one end and a magnet 41 at the other end each include an N pole disposed on the side of the outer peripheral inclined surface 32A and an S pole disposed on the side opposite to the outer peripheral inclined surface 32A. A magnet 41 at the center includes an S pole disposed on the side of the outer peripheral inclined surface 32A and an N pole disposed on the side opposite to the outer peripheral inclined surface 32A.

In a case where the magnets 41 are arranged in the N-S array in this manner, magnetic fields extend on both sides of the magnet unit, as shown in Fig. 13. Thus, unlike the magnetic gear 30A in accordance with Embodiment 2, it is impossible to strengthen a magnetic field strength on a side of the magnet unit 40 which side is opposite to the outer peripheral inclined surface 32A.

Lines of magnetic force generated inside the magnetic gear do not contribute to torque transmission, and thus are wasted. In contrast, the Halbach array employed in the magnetic gear 30A can significantly increase the magnetic force only in a direction extending outwardly from the outer peripheral inclined surface 32A, which is necessary for torque transmission. Consequently, it is possible to increase the transmission torque of the magnetic gear 30A.

The magnet units 40 of the magnetic gear 30A are arranged (i) at certain intervals along the circumferential direction of the outer peripheral inclined surface 32A and (ii) along the diagonal direction with respect to the rotating shaft 33A of the rotary disc 31A. Consequently, similarly to the magnetic gear 30 in accordance with Embodiment 1, the magnetic gear 30A achieves a larger engagement area where the magnetic poles are engaged with each other, whereby a variation in the maximum transmission torque is reduced. This results in smooth rotation.

Each magnet unit 40 bonded to the outer peripheral inclined surface 32A is preferably coated with a resin. The resin is preferably an epoxy resin. This can prevent the magnet units 40 from falling off from the outer peripheral inclined surface 32A.

Effects of Embodiment 2

As discussed above, in accordance with Embodiment 2, a plurality of magnets 41 in each magnet unit 40 are arranged in a Halbach array with which directions of the magnetic poles are optimized so as to strengthen a magnetic field strength on an outer side of the outer peripheral inclined surface 32A of the rotary disc 31A. This can significantly increase the magnetic force only in a direction extending outwardly from the outer peripheral inclined surface 32A, which is necessary for torque transmission. As a result, it is possible to increase the transmission torque of the magnetic gear 32A.

Embodiment 3

The following will give a description of Embodiment 3 of the present invention. For convenience of description, a member having a function identical to that of a member discussed in the foregoing embodiments is given an identical reference sign, and a description thereof is omitted.

Configuration of Multi-Fingered Hand 15

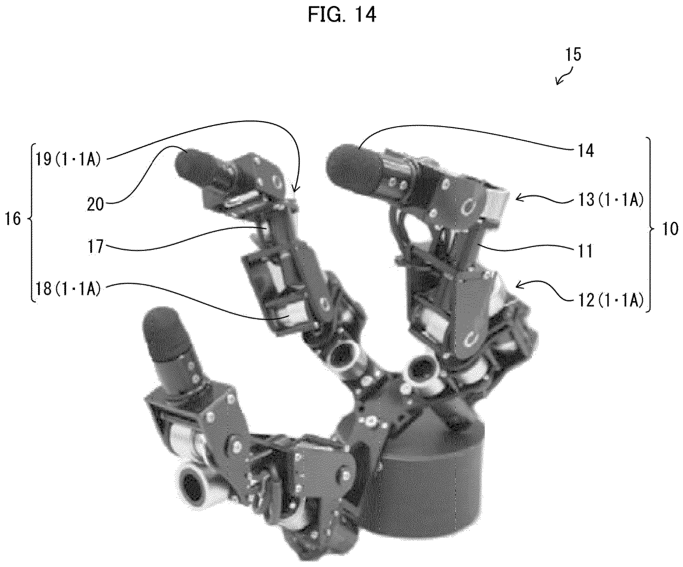

Fig. 14 is an image illustrating an appearance of a multi-fingered hand 15 (link mechanism) in accordance with Embodiment 3. The multi-fingered hand 15 includes a first finger 10 (link mechanism) and a second finger 16 (link mechanism). The first finger 10 includes a first link 11, a PIP joint 12 (first joint) connected to one end of the first link 11, a DIP joint 13 (second joint) connected to the other end of the first link 11, and a second link 14 having one end connected to the DIP joint 13. The second finger 16 includes a third link 17, a PIP joint 18 (third joint) connected to one end of the third link 17, a DIP joint 19 (fourth joint) connected to the other end of the third link 17, and a fourth link 20 having one end connected to the DIP joint 19. Each of the PIP joints 12 and 18 and the DIP joints 13·and 19 includes the actuator unit 1 or 1A.

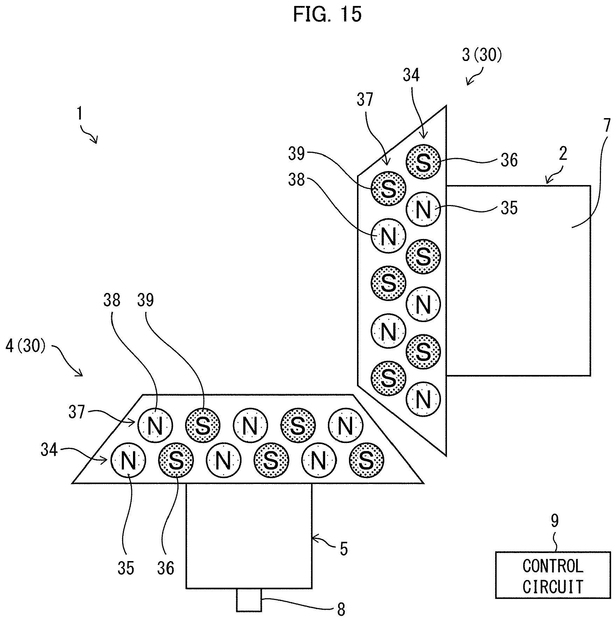

Fig. 15 is a perspective view illustrating a configuration of an actuator unit 1 included in the multi-fingered hand 15.

The actuator unit 1 includes a direct drive motor 2 (motor), a first magnetic gear 3 connected to a rotating shaft of the direct drive motor 2, a second magnetic gear 4 configured to be magnetically engaged with the first magnetic gear 3, and a planetary reducer 5 connected to a rotating shaft of the second magnetic gear 4.

Each of the first magnetic gear 3 and the second magnetic gear 4 has an identical configuration to that of the magnetic gear 30 in accordance with Embodiment 1. That is, each of the first magnetic gear 3 and the second magnetic gear 4 includes a rotary disc 31 that is in the form of a truncated cone. In the rotary disc 31, (i) a first magnetic pole array 34 that includes first N poles 35 and first S poles 36 alternately arranged at given intervals along a circumferential direction of an outer peripheral inclined surface (outer peripheral surface) 32 of the rotary disc 31 and (ii) a second magnetic pole array 37 that is arranged adjacent to the first magnetic pole array 34 along the circumferential direction and that includes second N poles 38 and second S poles 39 alternately arranged at given intervals are formed. One of the second N poles 38 of the second magnetic pole array 37 is positioned at a location corresponding to an intermediate position between a corresponding one of the first N poles 35 and a corresponding one of the second S poles 36 of the first magnetic pole array 34, the corresponding one of the first N poles 35 and the corresponding one of the second S poles 36 being adjacent to each other.

The first magnetic gear 3 and the second magnetic gear 4 carry out orthogonal conversion of rotation of the direct drive motor 2. Note that the first magnetic gear 3 and the second magnetic gear 4 may be arranged in parallel with each other.

The direct drive motor 2 includes an encoder 7 that measures an amount of reverse rotation of the rotating shaft of the direct drive motor 2, the reverse rotation occurring when an external force torque acts on the output shaft 8 of the planetary reducer 5.

The actuator unit 1 further includes a control circuit 9 that controls, in accordance with the amount of the reverse rotation measured by the encoder 7, the direct drive motor 2 so as to absorb an impact torque acting on the output shaft 8 of the planetary reducer 5.

The control circuit 9 controls the direct drive motor 2 so as to compensate a cogging torque generated at a timing of switching of magnetic poles of the first magnetic gear 3 and the second magnetic gear 4 engaged with each other.

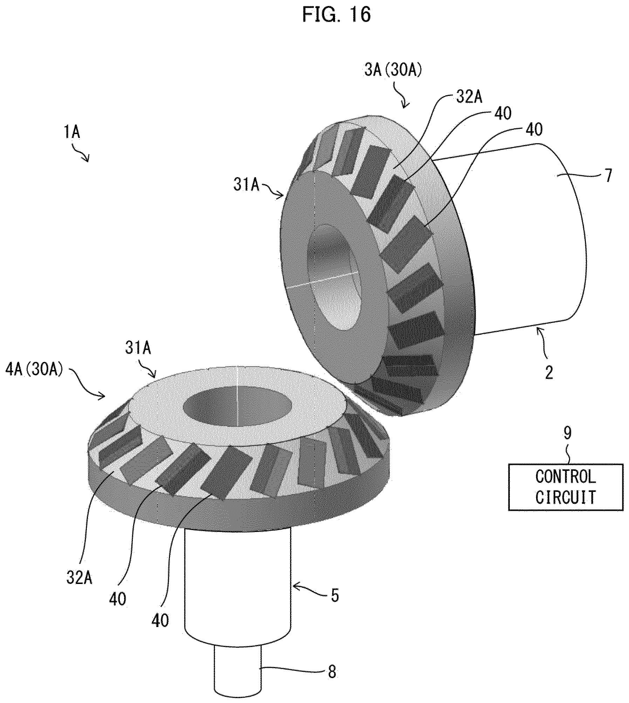

Fig. 16 is a perspective view illustrating a configuration of an actuator unit 1A included in the multi-fingered hand 15.

The actuator unit 1A includes a direct drive motor 2, a first magnetic gear 3A connected to a rotating shaft of the direct drive motor 2, a second magnetic gear 4A configured to be magnetically engaged with the first magnetic gear 3A, and a planetary reducer 5 connected to a rotating shaft 8 of the second magnetic gear 4A.

Each of the first magnetic gear 3A and the second magnetic gear 4A has an identical configuration to that of the magnetic gear 30A in accordance with Embodiment 2. That is, each of the first magnetic gear 3A and the second magnetic gear 4A includes a rotary disc 31A that is in the form of a truncated cone. The rotary disc 31A includes a plurality of magnet units 40 arranged along a circumferential direction of the outer peripheral inclined surface 32A (outer peripheral surface). Each magnet unit 40 includes a plurality of magnets 41 (Fig. 12) arranged in a Halbach array with which directions of the magnetic poles are optimized so as to maximize a magnetic field strength on an outer side of the outer peripheral inclined surface 32A.

The first magnetic gear 3A and the second magnetic gear 4A carry out orthogonal conversion of rotation of the direct drive motor 2. Note that the first magnetic gear 3A and the second magnetic gear 4A may be arranged in parallel with each other.

The direct drive motor 2 includes an encoder 7 that measures an amount of reverse rotation of the rotating shaft of the direct drive motor 2, the reverse rotation occurring when an external force torque acts on the output shaft 8 of the planetary reducer 5.

The actuator unit 1A further includes a control circuit 9 that controls, in accordance with the amount of the reverse rotation measured by the encoder 7, the direct drive motor 2 so as to absorb an impact torque acting on the output shaft 8 of the planetary reducer 5.

The control circuit 9 controls the direct drive motor 2 so as to compensate a cogging torque generated at a timing of switching of magnetic poles of the first magnetic gear 3A and the second magnetic gear 4A engaged with each other.

The multi-fingered hand 15 shown in Fig. 14 realizes shock-absorbing catching, and includes eight actuator units 1 or 1A. As shown in Figs. 15 and 16, each of the actuator units 1 or 1A carries out, by the first and second magnetic gears 3 and 4 or 3A and 4A, orthogonal conversion of the rotating shaft of the small direct drive motor 2, and reduces, by the planetary reducer 5, a rotation speed so as to be within a speed range suitable for application to robots.

The actuator unit 1 or 1A constituted by the direct drive motor 2, the planetary reducer 5 having a low reduction ratio, and the first and second magnetic gears 3 and 4 or 3A and 4A achieves low friction and high torque, thanks to adoption of the first and second magnetic gears 3 and 4 or 3A and 4A. Thus, the actuator unit 1 or 1A has quite excellent backdrivability.

Further, a longitudinal direction of the direct drive motor 2 and the output shaft 8 are in such a positional relation that the longitudinal direction of the direct drive motor 2 is orthogonal to the output shaft 8. Thus, it is easy to configure a small robot hand and a small leg robot.

Thanks to adoption of the multi-fingered hand 15 including the actuator units 1 or 1A having low friction and high torque, a shock absorbing control (Maxwell model control) can be realized only by a servo control, without using an external sensor.

[Table 1]

| Degree of freedom (the number of joints) [-] | 8 |
|---|---|
| Maximum fingertip speed [m/s] | 2.6 |
| Maximum fingertip force [N] | 6.8 |
| Link length (between PIP joint and DIP joint) [mm] | 77 |
| Link length (between DIP joint and fingertip) [mm] | 60.5 |
| Finger width [mm] | 35 |

[Table 2]

| | DIP joint | PIP joint |
|---|---|---|
| Reduction ratio [-] | 1/16.4 | 1/16.4 |
| Maximum fingertip speed [rpm] | 182 | 182 |
| Maximum torque [Nm] | 0.41 | 1 |
| Backlash [degree] | 0.5 | 0.5 |
| Movable range [degree] | -90 to 90 | -90 to 90 |
| Encoder resolution [p/r] | 500 | 72000 |
| Weight [g] | 110 | 170 |

[Table 3]

| | DIP joint | PIP joint |
|---|---|---|
| Static friction [Nm] | 4.0E-3 | 1.68E-2 |
| Viscous friction [Nms/rad] | 3.98E-5 | 3.72E-4 |
| Coulomb friction [Nm] | 3.37E-4 | 1.14E-2 |

Angle/Angular Velocity Tracking Characteristics

In order to examine the angle/angular velocity response characteristics of the DIP joint 13 and the PIP joint 12, an experiment on tracking a target angle was conducted in accordance with the following proportional-differential (PD) control formula (1):

$$\tau_{\mathrm{ref-i}} = K_{\mathrm{p-i}}(\theta_{\mathrm{ref-i}} - \theta_{\mathrm{i}}) - K_{\mathrm{d-i}}\dot{\theta}_{\mathrm{i}} \quad (i = 1, 2) \qquad (1)$$

$\tau_{\mathrm{ref-i}}$ is a torque command value of the joint i, $K_{\mathrm{p-i}}$ is a proportional gain, and $K_{\mathrm{d-i}}$ is a derivative gain. $\theta_1$ is an angle of the DIP joint 13, and $\theta_2$ is an angle of the PIP joint 12. In accordance with the following formula (2), a target angle value was sequentially given to the shafts of the DIP joint 13 and PIP joint 12, and the target value was swept (changed continuously) for 0 to 2 seconds. Note that, in order to eliminate an effect(s) given by coupled oscillation, the experiment was conducted by fixing the joint(s) not to be driven.

$$\theta_{\text{ref}-i} = \frac{\pi}{6}\sin(2\pi t^2) \quad (i = 1, 2) \tag{2}$$

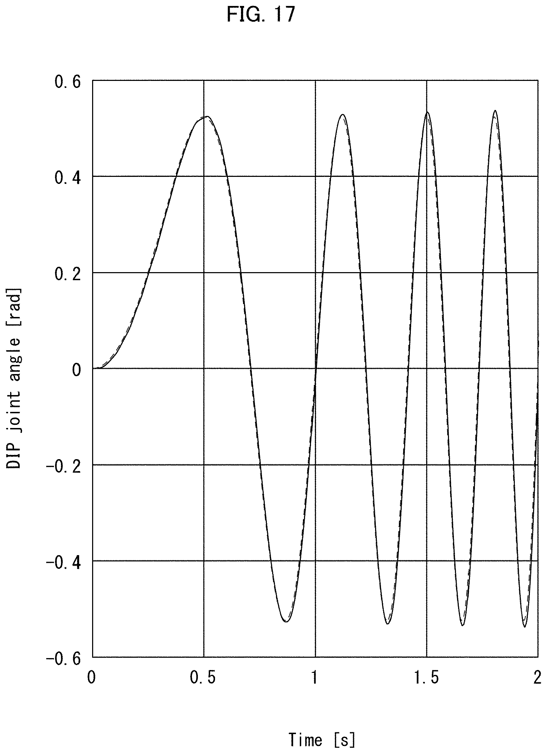

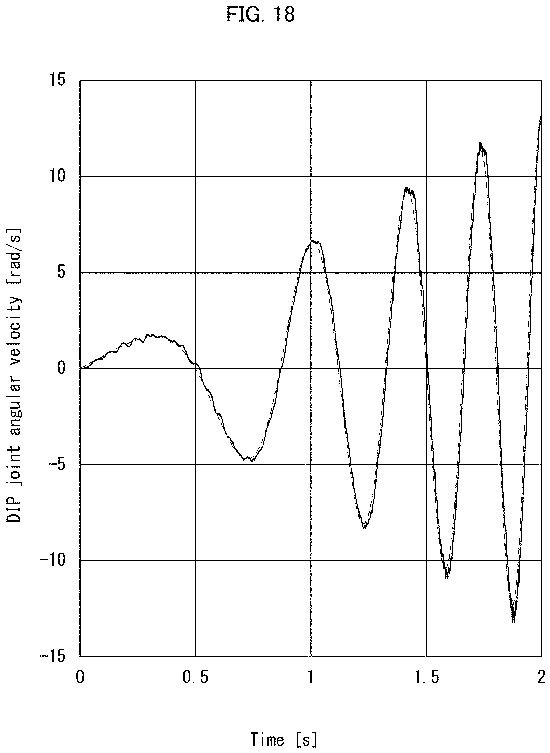

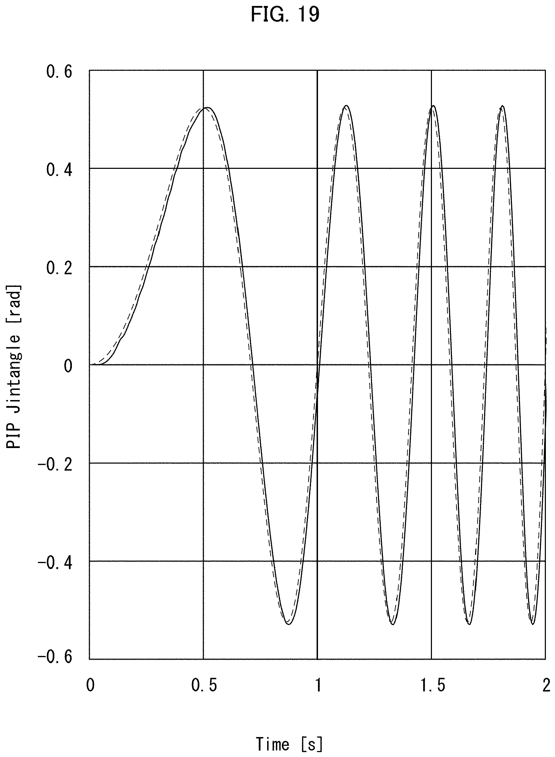

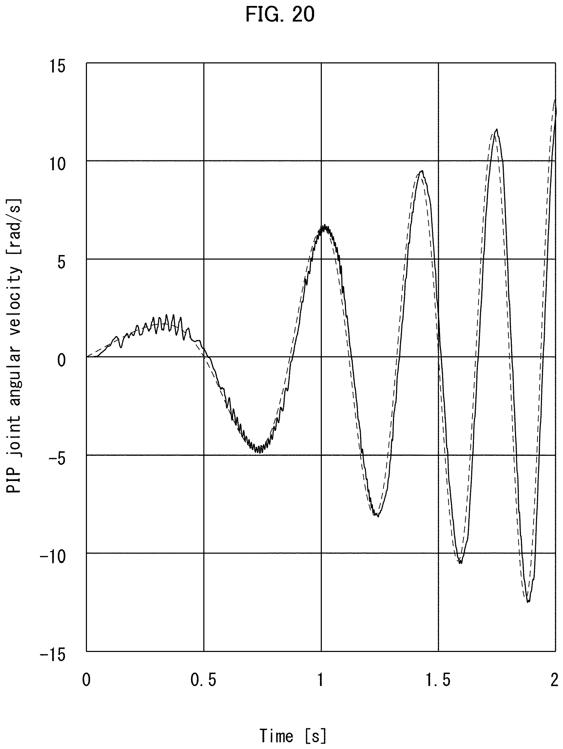

Fig. 17 is a graph illustrating an angle response observed when the PD angle control for the DIP joint 13 was conducted. Fig. 18 is a graph illustrating an angular velocity response observed at that time. Fig. 19 is a graph illustrating an angle response observed when the PD angle control for the PIP joint 12 was conducted. Fig. 20 is a graph illustrating an angular velocity response observed at that time. Note that the angular velocities were calculated by differentiating the angles. The broken line in each graph indicates a target angle value or an ideal velocity value.

Figs. 17 and 18 show that the DIP joint 13 had good tracking performance with respect to the target values both in the angle and angular velocity. Thanks to adoption of the magnetic gear with low cogging, the DIP joint 13 can carry out smooth angle/velocity control even without friction/cogging compensation.

Meanwhile, Figs. 19 and 20 show that the PIP joint 12 had pulsations in its angular velocity within an angular velocity range of -5 to 5 rad/s. The reason for this is considered as follows: Focusing on the torque, the PIP joint 12 employed the magnetic gear with a large torque; consequently, a cogging torque generated at a timing of switching of magnetic poles of the magnetic gears reached a level that could not be ignored, which caused pulsations in the velocity.

Friction/Cogging Torque Model and Compensation Control

In order to control the angle and angular velocity of the PIP joint 12, a friction/cogging model is introduced. In order to achieve a simple model, a one-link one-inertia system is employed, and the cogging torque of the magnetic gear is approximated by a cos waveform. The friction/cogging torque model is indicated in the following formula (3):

$$I\ddot{\theta}_{2-\text{m}} + D\dot{\theta}_{2-\text{m}} + C\,\text{sgn}(\dot{\theta}_{2-\text{m}}) - \sum_{i=1,8} C_i \cos(i\theta_{2-\text{m}} + \theta_{\text{offset}-i}) = \tau_{\text{ref}-2} - \tau_{\text{offset}-2} \tag{3}$$

In the left side of the formula (3), the first item is an inertial force, the second item is a viscous friction force, the third item is a coulomb friction force, and the fourth item is a cogging torque. $\theta_{2-\text{m}}$ is a motor angle of the PIP joint 12, I is a moment of inertia, D is a viscous friction coefficient, C is a coulomb friction coefficient, $C_i$ is a cogging torque coefficient, and $\theta_{\text{offset}-i}$ is a phase of a cogging waveform. Meanwhile, in the right side of the formula (3), the first item is a torque command, and the second item is a zero-point offset error of the torque command. These parameter values were obtained by the MD determination method and a suitable step response. With use of the parameter determination values of the friction/cogging torque items

$$\begin{bmatrix} \hat{D} & \hat{C} & \hat{C}_1 & \hat{C}_8 & \theta_{\text{offset}-1} & \theta_{\text{offset}-8} & \tau_{\text{offset}-2} \end{bmatrix},$$

the friction/cogging compensation is carried out in accordance with the following formula (4).

$$\tau_{\text{ref}-2} = \tau'_{\text{ref}-2} + D\dot{\theta}_{2-\text{m}} + C\,\text{sgn}(\dot{\theta}_{2-\text{m}}) - \sum_{i=1,8} C_i \cos(i\theta_{2-\text{m}} + \theta_{\text{offset}-i}) + \tau_{\text{offset}-2} \tag{4}$$

In the above formula, $\tau'_{\text{ref-2}}$ is a torque command value given by the PD control or a torque command value for the shock absorbing control.

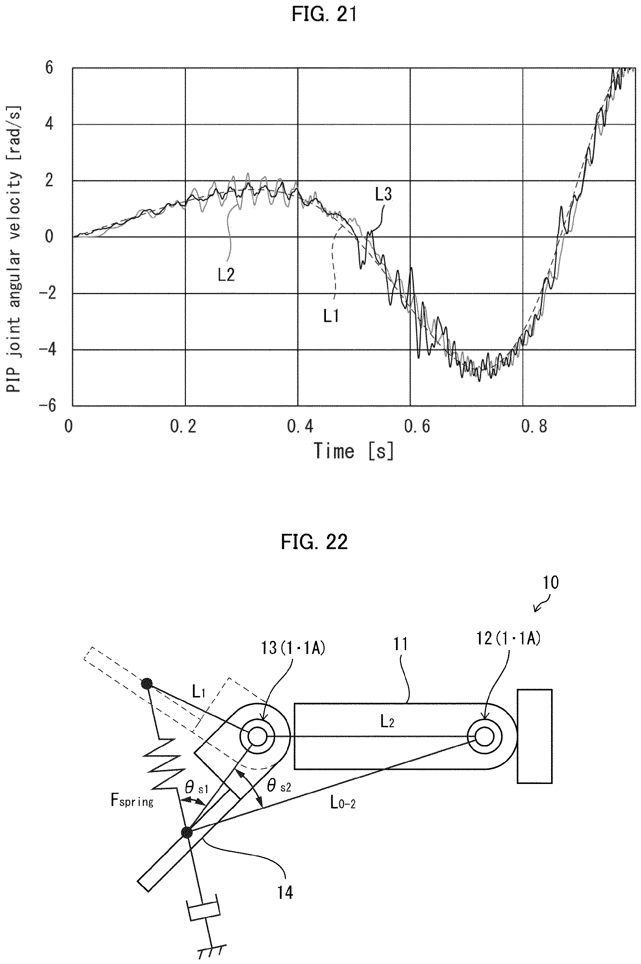

Fig. 21 is a graph showing effects of a friction/cogging torque control for the PIP joint 12. The vertical axis indicates an angular velocity, and the horizontal axis indicates time. The line L1 indicates an ideal value, the line L2 indicates an angular velocity value obtained when the PD control was executed alone, and the line L3 indicates an angular velocity value obtained when the PD control and the friction/cogging torque compensation control were executed in combination. Fig. 21 shows that, in an angular velocity range of 0 to 2 rad/ s, the line L3, obtained with use of the friction/cogging torque compensation control, exhibited tracking characteristics improved as compared to the line L2, obtained by the PD control alone. Thus, in the line L3, the pulsations in the angular velocity were clearly reduced. However, in an angular velocity range of -5 to 0 rad/s, the pulsations of the velocity were increased more in the line L3, obtained with use of the friction/cogging torque compensation control. Thus, with this friction/cogging torque model, it is difficult to smoothly control the angle and angular velocity in a task including switching of a joint rotation direction. However, a task for shock-absorbing catching of an object employs this friction/cogging torque model, since what is required in this task is to control the angle and angular velocity smoothly in one direction.

Shock-Absorbing Catching

In the multi-fingered hand 15 in accordance with Embodiment 3, the first finger 10 (second finger 16) is configured to have a mechanism with quite low friction. Thus, even when a small external force is applied to the first finger 10, backdriving of the joint occurs. An amount of rotation caused by the backdriving can be accurately measured by the encoder 7 in the direct drive motor 2. This feature is advantageous when estimation of a grasping force or impedance control is carried out with high accuracy without an external sensor. In Embodiment 3, it was demonstrated whether or not the first finger 10 of the multi-fingered hand 15 can realize the series impedance control (Maxwell model control) proposed by the inventors of the present invention.

For a general impedance control, a Voigt model constructed by a spring and a damper connected in parallel is used. With this, however, a reaction force for returning to an initial position would necessarily occur after collision with an object and/or an environment. This reaction force causes a phenomenon that a control target flips back an object in high-speed catching.

In order to deal with this, a control method that employs the Maxwell model constructed by a spring and a damper connected in series is proposed. With the Maxwell model, a plastically deforming behavior (a behavior with which a reaction force for returning to an initial position would not occur) is realized. Thus, the Maxwell model is effective to catching of a light-weight object without flipping it back. The method in accordance with Embodiment 3 causes the DIP joint 13 of the multi-fingered hand 15 to generate a virtual spring force, and then carries out, in accordance with feedback of the spring force, a damping control for the PIP joint 12, thereby realizing the series-connected spring and damper model.

Heretofore, there have been reported some examples that carry out a simulation or measure a variation occurring in an actual spring attached to the hand tip of an actuator so as to catch an object without flipping back the object. However, due to the problem of friction in the mechanism system and the difficulty in maintaining contact with the object, the Maxwell model control carried out only by the servo control has not ever been realized in a robot hand.

Control Formula

In Embodiment 3, the Maxwell model control is realized by making use of the high backdrivability of the actuator unit 1 or 1A. The conventional methods have employed a position-based control. With the method employing the position-based control, the effects given by friction can be reduced by a position control loop. At the same time, however, this method requires quite high control responsiveness in order to maintain contact between the object and the fingertip, and thus it is difficult to carry out the control in a stable manner.

Meanwhile, Embodiment 3 employs a torque-based control. With this, taking advantage of the high backdriving characteristics of the actuator unit 1 or 1A, Embodiment 3 can facilitate maintaining of contact between the object and the fingertip.

Fig. 22 is a view schematically illustrating a mechanism of the Maxwell model control for the first finger 10 included in the multi-fingered hand 15.

As shown in Fig. 22, a virtual spring is set at the fingertip of the second link 14 of the first finger 10. Then, on the basis of an initial angle $\theta_{initial\Box 2}$ of the DIP joint 13, a virtual spring force $F_{spring}$ is calculated in accordance with the formula (5).

$$F_{spring} = 2\,K_s K_g L_1 \cos(\theta_{s1}) \qquad (5)$$

$K_s$ is a spring constant of the virtual spring, $K_g$ is a reduction ratio, L1 is a link length between a center of the finger surface and the DIP joint 13, and $\theta_{s1}$ is an angle made by an axial direction of the virtual spring and the link L1. With use of the virtual spring force $F_{spring}$, a torque target value $\tau_{ref\text{-}1}$ of the DIP joint 13 is given in accordance with the following formula (6).

$$\tau_{ref-1} = \frac{F_{spring}}{K_g} L_1 \sin(\theta_{s1}) \qquad (6)$$

$\theta_{s2}$ is an angle made by the link $L_1$ and the virtual link $L_{0\text{-}2}$ (a distance between the center of the finger surface and the PIP joint 12). Meanwhile, with use of a derivative value of $F_{spring}$, a damping torque of the PIP joint 12 is given in accordance with the following formula (7).

$$\tau'_{ref-2} = \frac{K_d}{K_g} \dot{F}_{spring} L_{0-2} \sin(\theta_{s1} + \theta_{s2}) \qquad (7)$$

Kd is a viscosity coefficient of a virtual damper. By the formulae (6) and (7), the virtual spring and the virtual damper connected in series are represented in terms of the coordinates of the hand tip. With this, a plastically deforming behavior in accordance with the Maxwell model is realized.

Experiment

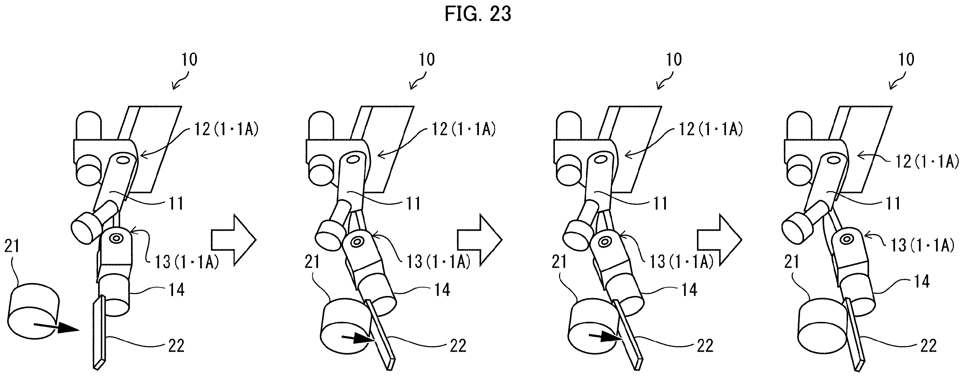

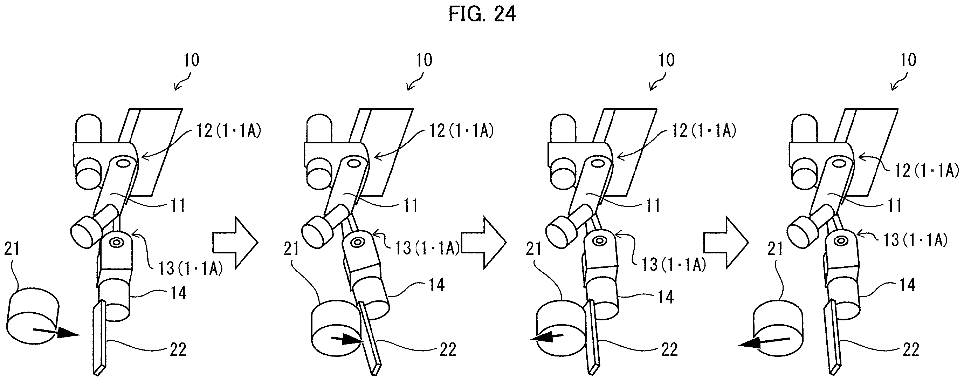

Fig. 23 is a view illustrating, in time series, how the first finger 10 of the multi-fingered hand controlled by the Maxwell model control carries out operation of catching a light-weight object. Fig. 24 is a view illustrating, in time series, how a first finger 10 of a multi-fingered hand controlled by a control mode in accordance with a comparative example carries out operation of catching a light-weight object. Constituent elements identical to those described above are given identical reference signs. The detailed descriptions of such constituent elements will not be given again.

It was demonstrated whether or not the torque-based Maxwell model control enabled catching of a light-weight object 21 without flipping back the light-weight object 21. The object 21 was an iron cylinder having a weight of 100 g. The object 21 was rolled over an inclined surface so as to be accelerated, and was then allowed to collide with a fingertip 22 of the first finger 10, which is a one-finger two-joint module, on a horizontal plane. Note that the fingertip 22 was made of an aluminum flat plate. In order to enhance reproducibility of the experiment, pieces of nonslip tape of approximately 0.2 mm in thickness were bonded to the surface of the fingertip 22, the object 21, and the surface of the experiment device.

As shown in Fig. 23, when the torque-based Maxwell model control was applied to the PIP joint 12 and the DIP joint 13, the fingertip 22 could keep contact with the object 21 without flipping back the object 21.

Meanwhile, Fig. 24 illustrates a state in which a gain for the damping control of the PIP joint 12 was set at zero and catching was carried out only by a behavior of the spring in the DIP joint 13. In this case, the fingertip 22 flipped back the object 21 after coming in contact with the object 21, and thus contact therebetween could not be maintained. Similarly, also in a case where the friction/cogging torque compensation control for the PIP joint 12 was turned off, the fingertip 22 flipped back the object 21 after coming in contact with the object 21, and thus contact therebetween could not be maintained.

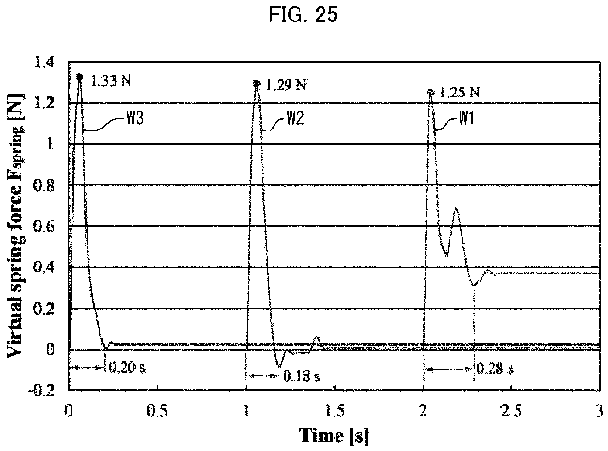

Fig. 25 is a graph illustrating a relation between virtual spring reaction forces and periods of elapsed time, each of the virtual spring reaction forces acting on the first finger 10 of the multi-fingered hand 15 controlled by the Maxwell model control or the control mode in accordance with the comparative example. The waveform W1 indicates a virtual spring reaction force observed when the Maxwell model control with the friction/cogging compensation control was applied, the waveform W2 indicates a virtual spring reaction force observed when the Maxwell model control without the friction/cogging compensation control was applied, and the waveform W3 indicates a virtual spring reaction force observed when the gain for the damping control of the PIP joint 12 was set at zero.

In the waveform W1, a smallest impulsive force and increased contact time were observed. The waveform W1 had two peaks of the virtual spring force. This is a result of a phenomenon, caused by a relatively large gain set for the damping control in the Maxwell model control, that the fingertip 22 was slightly separated from the object 21 after the first collision and thereafter the second collision occurred. In order to maintain the contact continuously, it is necessary to set an appropriate gain for the damping control and to compensate the static friction. The above-indicated results show that combining the first finger 10 of the multi-fingered hand 15 with the torque-based Maxwell control and the friction/cogging torque compensation control makes it possible to reduce the impulsive force at the time of collision with the object 21 so as to increase the contact time. Thanks to these effects, it is possible to catch a light-weight object without flipping it back.

As discussed above, the control circuit 9 carries out the damping control for the actuator unit 1 of the PIP joint 12 so that a force of the virtual damper acts on the second link 14 and carries out the compliance control for the actuator unit 1 of the DIP joint 13 so that a force of the virtual spring acts on the second link 14.

Effects of Embodiment 3

In accordance with Embodiment 3, it is possible to realize shock-absorbing catching involving use of (i) the new actuator unit 1 or 1A having a small size and low friction and (ii) the Maxwell model control. By a combination of the small direct drive motor 2 and the planetary reducer 5, a small reduction ratio and an increased torque can be achieved. By employing the configuration in which orthogonal conversion of the rotating shaft 6 is carried out with use of the first and second magnetic gears 3 and 4 or 3A and 4A, the multi-fingered hand 15 having quite high backdrivability and a small size can be realized. In addition, the first and second magnetic gears 3 and 4 or 3A and 4A can bring merits of (i) being free from maintenance and (ii) adding a torque limiter function.

In order to deal with the problem that pulsations occur in a low speed range of a rotation speed of the PIP joint 12 due to a cogging torque of the magnetic gear, Embodiment 3 adopts the compensation control according to the friction/cogging torque model that is simple. The compensation control according to the friction/cogging torque model in accordance with Embodiment 3 is effective for a task for which smooth joint driving only in one direction is important, like a task of ball catching.

Thanks to adoption of the actuator unit 1 or 1A in accordance with Embodiment 3, the shock-absorbing catching involving use of the Maxwell model control can be realized only by the servo control. According to the result of the experiment, a period of time in which an impulsive force was generated as a result of collision with the object 21 was 180 to 280 ms, i.e., quite short. In order to reduce the shock in such a short time, it is effective to combine the mechanism according to the actuator unit 1 having high backdrivability with a high-speed torque-based control. Further, by combining a high-speed vision sensor and/or a high-speed, highly accurate proximity sensor with the multi-fingered hand 15, it is possible to aim to (i) realize a higher-speed catching task of a higher level and (ii) advance functions of a product assembling task.

Embodiment 4

Embodiment 4 proposes grasping operation carried out with use of the multi-fingered hand 15 and the shock absorbing control described in Embodiment 3. This grasping operation which does not use an external sensor brings the first finger 10 (one finger) into contact with a target object to be grasped, and makes the second finger 16 (the other finger) closer to the object, thereby carrying out grasping without stopping the hand tip of the multi-fingered hand 15. Thanks to a combination of the high backdrivability of the multi-fingered hand 15 with the shock absorbing control, it is possible to realize high-speed, seamless operation and to reduce an impact force occurring at grasping. On these points, this operation is effective.

In quasi-static grasping operation, (1) fingertip arrangement along the shape of an object and (2) grasping force adjustment in accordance with a weight of an object and a friction coefficient are emphasized. However, in a case where grasping of a moving object is carried out or grasping is carried out while the robot itself is moving, (3) a method for absorbing an impact force generated at grasping for the purpose of preventing flipping-back of an object and (4) a method for seamlessly executing operation from reaching to grasping for the purpose of accelerating the entire operation are required in addition to (1) and (2) described above. Particularly in assembling of a small part such as a bearing or a plastic product, an object to be grasped is often lighter in weight than the fingertip of the hand. Thus, as the speed of the grasping operation increases, a failure case in which the object is flipped back occurs outstandingly. Further, according to the conventional methods, the reaching operation and the grasping operation are often carried out by different methods. This causes intermissions in the operation of the robot at the timing of switching between these controls, disadvantageously. Embodiment 4 proposes operation of grasping an object in a seamless motion without flipping back the object, the operation being realized by employing the multi-fingered hand 15 and the shock absorbing control (Maxwell model control) in accordance with Embodiment 3.

Grasping Operation

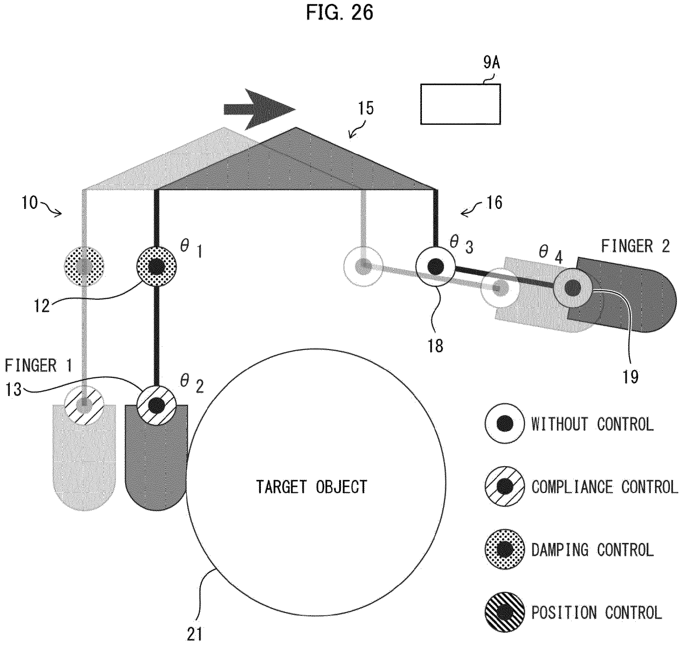

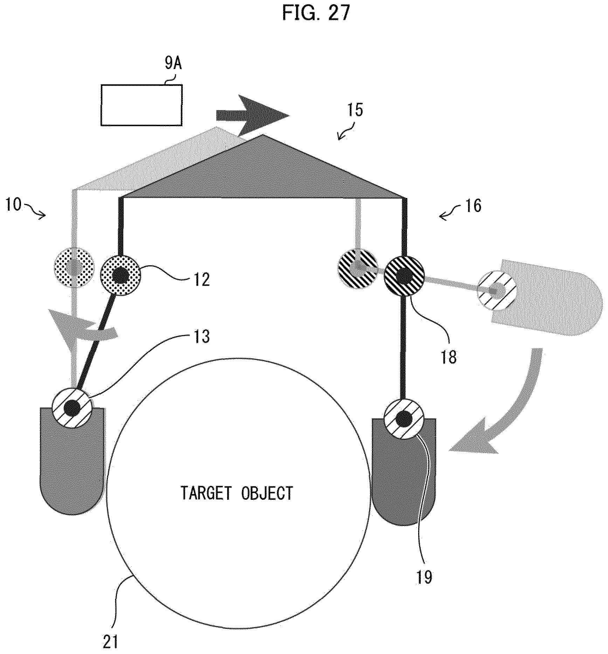

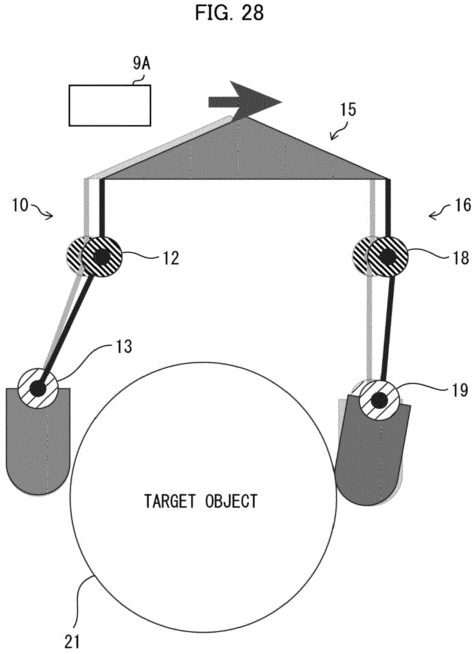

Fig. 26 is a view schematically illustrating a first phase of operation of a multi-fingered hand 15 in accordance with Embodiment 4. Fig. 27 is a view schematically illustrating a second phase of the operation of the multi-fingered hand 15. Fig. 28 is a view schematically illustrating a third phase of the operation of the multi-fingered hand 15. Constituent elements identical to those described above are given identical reference signs. The detailed descriptions of such constituent elements will not be given again.

The following description will discuss how the operation phase is switched from one to another in two fingers and four joints in the multi-fingered hand 15. First, as shown in Fig. 26, the first phase is carried out so as to move the whole of the multi-fingered hand 15 rightward to bring a first finger 10 into contact with an object 21. Then, as shown in Fig. 27, the second phase is carried out to make a second finger 16 approach the object 21 from an opposite side to the first finger 10. In the end, as shown in Fig. 28, the third phase is carried out for grasping force adjustment with use of the first finger 10 and the second finger 16. Note that this operation does not use a tactile sensor or a proximity sensor, but uses only joint angle feedback of the first finger 10 and the second finger 16.

A PIP joint 12 and a DIP joint 13 of the first finger 10 as well as a PIP joint 18 and a DIP joint 19 of the second finger 16 each include an actuator unit 1 or 1A described in Embodiment 3. This actuator unit 1 or 1A is a small, low-friction actuator constituted by a small direct drive motor 2 (available from Microtech Laboratory Inc.), first and second magnetic gears 3 and 4 or 3A and 4A of orthogonal conversion type, and a small planetary reducer 5 (available from Shindensha) (Figs. 15 and 16). By employing the small direct drive motor 2 and the small planetary reducer 5 (reduction ratio: approximately 1/16), it is possible to exert a high torque even with a low reduction ratio. Further, by employing a configuration in which orthogonal conversion of a rotating shaft of the direct drive motor 2 is carried out by the first and second magnetic gears 3 and 4 or 3A and 4A, a small, low-friction mechanism is realized. Application of an external force torque to an output shaft 8 causes reverse rotation. An amount of the rotation can be measured by an encoder 7 in the direct drive motor 2. By using the high backdrivability and angle measurement, the actuator unit 1 or 1A can realize the compliance control and the damping control only by angle feedback (without use of an external sensor), which is advantageous.

Operation Phases

In all of the first to third phases, the compliance control is carried out for a joint angle $\theta 2$ of the DIP joint 13 of the first finger 10 and a joint angle $\theta 4$ of the DIP joint 19 of the second finger 16. When a variation in the joint angle $\theta 2$ or $\theta 4$ becomes not less than a threshold, it is determined that a corresponding finger comes into contact with the object 21. Then, the control for the joint angle $\theta 1$ or $\theta 3$ of the PIP joint 12 or 18 of the first finger 10 or the second finger 16 is switched. The PIP joints 12 and 18 are controlled by the damping control or the position control.

In the first and second phases, the damping control is carried out for the PIP joint 12 of the first finger 10, which realizes a plastically deforming behavior together with the compliance control for the DIP joint 13 of the first finger 10. This plastically deforming behavior can reduce an average impulsive force generated when the object 21 and the first finger 10 collide with each other, whereby the first finger 10 can maintain contact with the object 21 without flipping it back. Then, at the time when the variation in the angle of the joint angle $\theta 2$ of the DIP joint 13 of the first finger 10 exceeds a threshold, the first phase is switched to the second phase.

In the second phase, the position control is carried out for the joint angle $\Theta 3$ of the PIP joint 18 of the second finger 16 so as to make the second finger 16 approach the object 21. Then, at a time when a variation in the joint angle $\theta 4$ of the DIP joint 19 of the second finger 16 becomes not less than a threshold, the operation phase is switched to the third phase.

In the third phase, the position control is carried out both for the joint angle $\theta 1$ of the PIP joint 12 of the first finger 10 and the joint angle $\Theta 3$ of the PIP joint 18 of the second finger 16. The grasping force adjustment is carried out such that (i) the joint angle $\theta 1$ of the first finger 10 is maintained at an angle set at the time when the third phase is started and (ii) the joint angle $\Theta 3$ of the second finger 16 is set so that a variation occurring in a virtual spring as a result of the compliance control for the DIP joint 19 becomes constant.

In the method in accordance with Embodiment 4, the DIP joints 13 and 19 are always under the compliance control. This provides an advantage of facilitating maintaining of contact between the object 21 and the fingertip. Further, the feedback loop is closed only in the control of the multi-fingered hand 15. Therefore, in the robot arm including the multi-fingered hand 15, only the Point to Point (P to P) position control may be carried out. When the position of the hand tip of the robot arm is caused to move toward an object 21, which is a target object to be grasped, the multi-fingered hand 15 automatically detects contact with the object 21 and grasps the object 21 while carrying out the shock absorbing control. This is a feature of the method in accordance with Embodiment 4.

As discussed above, a control circuit 9A executes, in order to grasp an object 21 with a small shock, (i) the first phase that carries out the damping control for the PIP joint 12 and carries out the compliance control for the DIP joint 13, (ii) the second phase that carries out the position control for the PIP joint 18 and causes the DIP joint 19 to get closer to the object 21, and (iii) the third phase that carries out the position control for the PIP joint 12 and carries out the position control for the PIP joint 18 so that a variation occurring in a virtual spring as a result of the compliance control for the DIP joint 19 becomes constant, the first phase, the second phase, and the third phase being executed in this order.

Grasping Experiment

A multi-fingered hand 15 including two fingers and four joints was configured with use of four actuator units 1 or 1A. The multi-fingered hand 15 was attached to an arm (UR5e) available from Universal Robot Co., Ltd. A motor driver of each actuator unit 1 was connected to a real-time controller (dSPACE). Then, angle feedback of the encoder 7 was carried out per ms, and a torque control (current control) for the actuator unit 1 was carried out. Note that, on the real-time controller, a torque command value-type PD position control or a shock absorbing control was carried out with use of an angle from the encoder 7. A controller of the arm was connected to the real-time controller merely via an input-output (IO) port. From the real-time controller, only a signal regarding a timing to start arm operation was supplied to the controller of the arm. Upon reception of this signal, the controller of the arm started a feed forward control for the position of the hand tip of the arm. Note that a target value of the position of the hand tip of the arm was set so as to allow the arm to pass through each of the positions away from the position of the object 21 by $\pm 30$ mm, for the purpose of dealing with an error in positioning of the object 21.

The multi-fingered hand 15 could grasp a plastic bottle, a can, and a portable handset of a telephone. After the first finger 10 collided with the object 21, the second finger 16 got closer to the object 21. Then, the first finger 10 and the second finger 16 held two sides of the object 21, and lifted up the object 21. Although the plastic bottle, the can, and the portable handset of the telephone were different in weight and size, the plastic bottle, the can, and the portable handset of the telephone could be grasped with the same parameter. The method in accordance with Embodiment 4 has robustness against an error in positioning of the object 21 in a direction approaching the hand tip of the arm and an error in width of the object 21, and thus enables grasping of the object 21 with a seamless motion while reducing an impact force from the object 21.

Small-Shock, Nonstop Grasping (Vertical Motion of Arm)

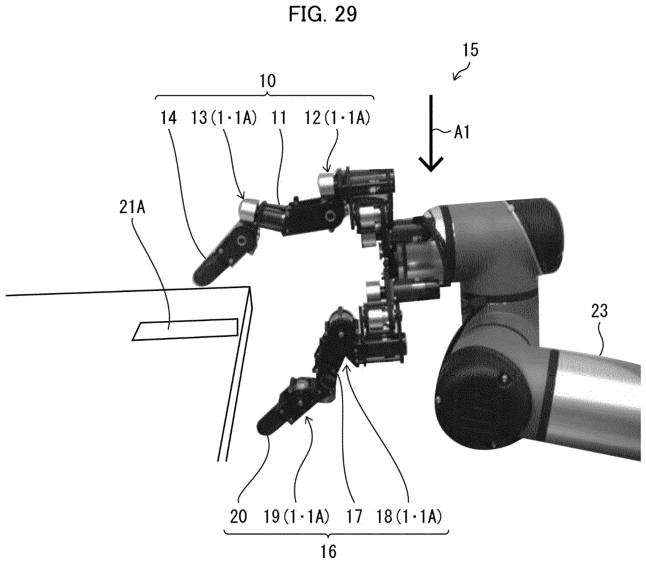

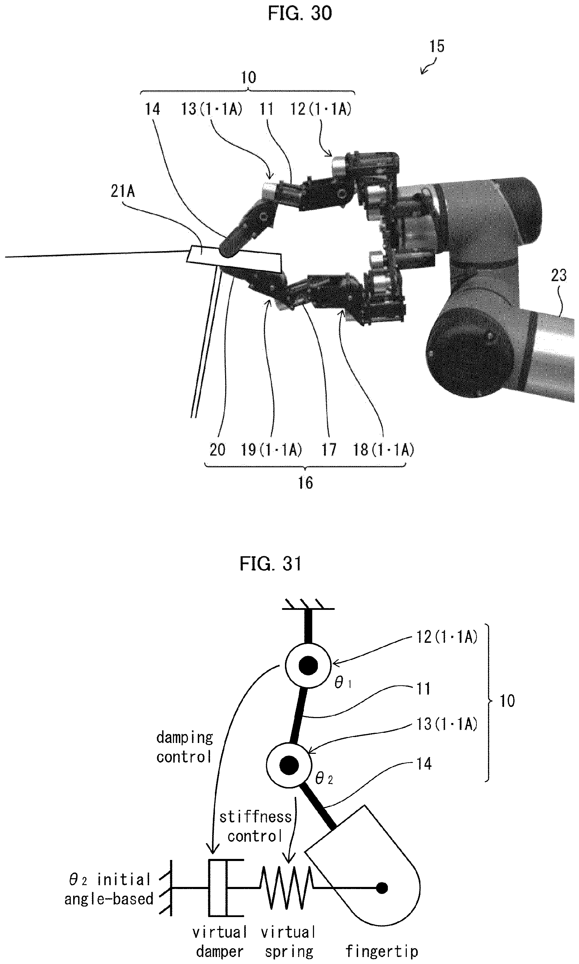

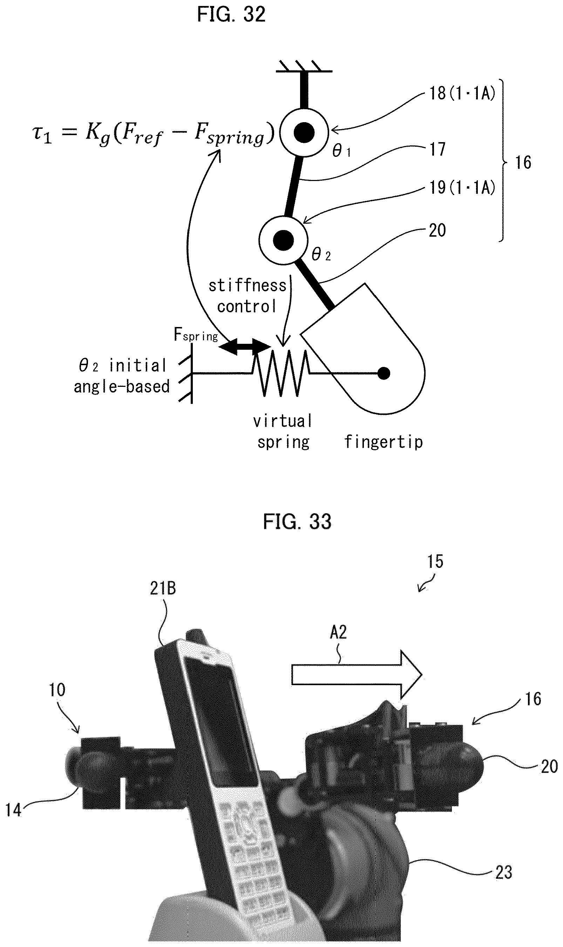

Fig. 29 is an image illustrating a motion of a multi-fingered hand 15 that is to grasp a thin plate-like object 21A at a high speed. Fig. 30 is an image illustrating a motion of the multi-fingered hand 15 that has grasped the object 21A at a high speed. Fig. 31 is a view schematically illustrating a concept of a plastically deforming control mode of the multi-fingered hand 15. Fig. 32 is a view schematically illustrating a concept of a series elastic actuator mode 1 of the multi-fingered hand 15. Constituent elements identical to those described above are given identical reference signs. The detailed descriptions of such constituent elements will not be given again.

The multi-fingered hand 15 attached to an arm 23 included a first finger 10 and a second finger 16. First, the arm 23 was caused to approach the thin plate-like object 21A on a desk from an upper side as indicated by the arrow A1, thereby bringing the tip of a second link 14 of the first finger 10 into contact with the object 21A. The object 21A was a business card.

The first finger 10 was caused to operate in the plastically deforming mode shown in Fig. 31. This plastically deforming mode corresponds to the plastically deforming mode described in Embodiment 3. An actuator unit 1 or 1A of the DIP joint 13 was controlled so that a virtual spring force acted on the tip of the second link 14. An actuator unit 1 or 1A of the PIP joint 12 was controlled so that a virtual spring force acted on the tip of the second link 14. Consequently, an impact force from the object 21A was absorbed.

Next, the second finger 16 was caused to operate in the series elastic actuator mode 1 shown in Fig. 32. An actuator unit 1 or 1A of the DIP joint 19 was controlled so that a virtual spring force acted on the tip of a fourth link 20. An actuator unit 1 or 1A of the PIP joint 18 carried out a grasping force control so that a variation occurring in the virtual spring force as a result of control of the DIP joint 19 became constant, thereby maintaining a constant contact force with respect to the object 21A.

The multi-fingered hand 15 could grasp the object 21A, which was the business card on the desk, with a small shock and nonstop at a high speed. A period of time taken from the approaching to the grasping was not more than 1 second.

Small-Shock, Nonstop Grasping (Lateral Motion of Arm)

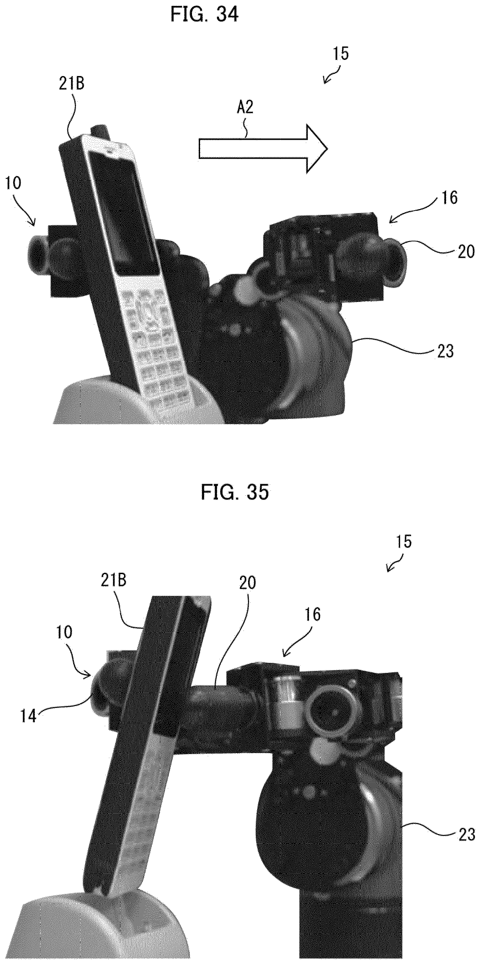

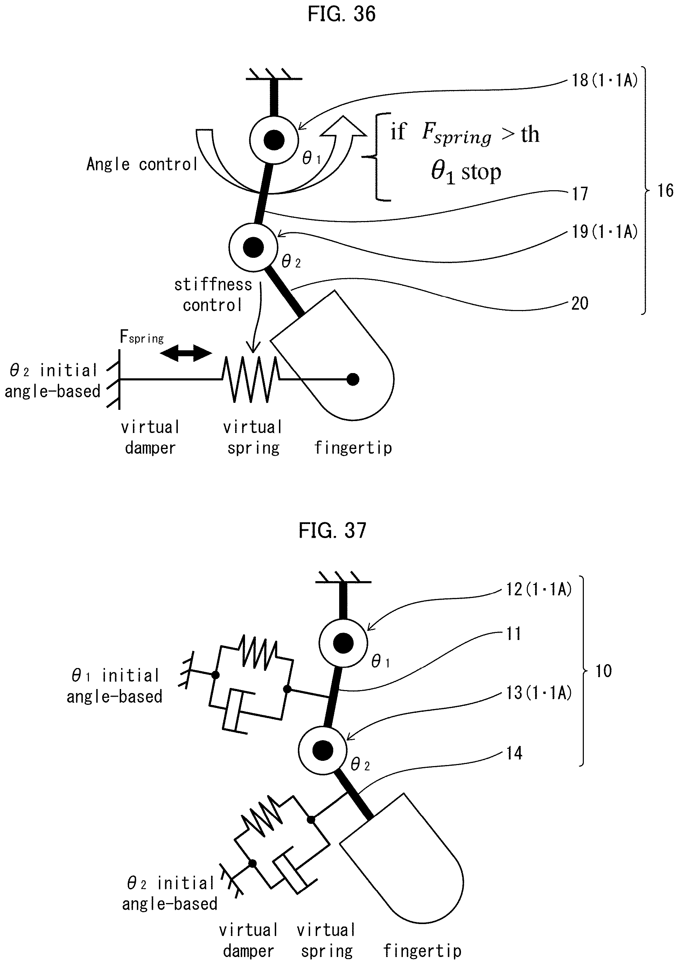

Fig. 33 is an image illustrating a motion of the multi-fingered hand 15 controlled by the first phase for laterally grasping an object 21B on a desk at a high speed. Fig. 34 is an image illustrating a motion of the multi-fingered hand 15 controlled by the second phase for laterally grasping the object 21B at a high speed. Fig. 35 is an image illustrating a motion of the multi-fingered hand 15 controlled by the third phase for laterally grasping the object 21B at a high speed. Fig. 36 is a view schematically illustrating a concept of a series elastic actuator mode 2 of the multi-fingered hand 15. Fig. 37 is a view schematically illustrating a concept of a plastically deforming control mode of the multi-fingered hand 15. Constituent elements identical to those described above are given identical reference signs. The detailed descriptions of such constituent elements will not be given again.

The multi-fingered hand 15 attached to an arm 23 included a first finger 10 and a second finger 16. First, the arm 23 was caused to laterally approach the object 21B on the desk as indicated by the arrow A2, thereby bringing the tip of the second link 14 of the first finger 10 into contact with the object 21B. The object 21B was a portable handset of a telephone. The first finger 10 was caused to operate in the above-described plastically deforming mode. Consequently, an impact force from the object 21A was absorbed.

Next, the second finger 16 was caused to operate in the series elastic actuator mode 2 shown in Fig. 36. An actuator unit 1 or 1A of the DIP joint 19 was controlled so that a virtual spring force acted on the tip of a fourth link 20. An actuator unit 1 or 1A of the PIP joint 18 was controlled for an angular position. With this, the fingertip of the fourth link 20 of the second finger 16 approached the object 21B until the fingertip of the fourth link 20 of the second finger 16 came into contact with the object 21B.

Thereafter, the first finger 10 and the second finger 16 were caused to operate in the elastically deforming control mode shown in Fig. 37. The actuator units 1 or 1A of the DIP joints 13 and 19 and PIP joints 12 and 18 were controlled by the Voigt model constructed by a virtual spring and a virtual damper connected in parallel. With this, a constant contact force was maintained between (i) the first finger 10 and second finger 16 and (ii) the object 21B.

The multi-fingered hand 15 could grasp the object 21B, which was the portable handset on the desk, with a small shock and nonstop at a high speed. A period of time taken from the approaching to the grasping was not more than 1 second.

As discussed above, in order to grasp the object 21B with a small shock, the control circuit 9A carries out the damping control for the PIP joint 12 and the compliance control for the DIP joint 13 as well as the angle control for the PIP joint 18 and the compliance control for the DIP joint 19, and then controls the PIP joint 12, DIP joint 13, PIP joint 18, and DIP joint 19 by the model constructed by the virtual spring and the virtual damper connected in parallel.

Effects of Embodiment 4

In accordance with Embodiment 4, it is possible to realize the dynamic grasping operation involving use of the actuator unit 1 or 1A having high backdrivability and the shock absorbing control. This grasping operation carries out detection of contact with an object and the shock absorbing control only by joint angle feedback, so as to carry out grasping while continuously moving the position of the hand tip of the arm. The DIP joints 13 and 19 are always under the compliance control, which provides an advantage of facilitating maintaining of contact with the object 21A or 21B. Although this operation includes switching of the operation phase for the PIP joints 12 and 18 of the first finger 10 and the second finger 16, this operation operates seamlessly between a non-contact state and a contact state. Thus, this operation is suitable for high-speed grasping while moving. Further, since the feedback loop is closed on the multi-fingered hand 15 side, the control of the multi-fingered hand 15 and the control of the arm 23 can be carried out asynchronously, which is advantageous. Thanks to this advantage, the multi-fingered hand 15 can be attached to other arms than the arm (UR5e) manufactured by Universal Robot Co., Ltd. If the position of the hand tip of an arm having the multi-fingered hand 15 attached thereto is caused to approach an object 21A or 21B, then the multi-fingered hand 15 automatically carries out grasping operation in accordance with the position and the width size of the object 21A or 21B. Thus, the grasping operation having robustness can be achieved with a quite simple control system.

As indicated below (Table 4), as compared to the conventional direct drive motor, series elastic actuator (SEA), soft robot, and hydraulic configuration, the actuator unit 1 or 1A in accordance with Embodiment 3 or 4 has a relatively small size and a small hysteresis of force/variation and are excellent in variable impedance, service life/durability, and availability of an element part(s). Note that the words "Good" and "Poor" in Table 4 indicate a comparative evaluation. The word "Good" indicates that the item with that word has an excellent performance, whereas the word "Poor" indicates that the item with that word has a performance which is slightly inferior to that with the word "Good".

[Table 4]

|  | DD motor | Series elastic actuator (SEA) | Soft robot | Hydraulic | Actuator unit 1 |
|---|---|---|---|---|---|
| Size | Large-torque product -> Large size | Relatively large size (thick) | Small size | Large size | Relatively small size (orthogonal output) |
| Weight | Relatively heavy | Relatively light | Light | Heavy | Relatively heavy |
| Hysteresis of force / variation | Small | Medium | Large | Small | Small |

(continued)

|  | DD motor | Series elastic actuator (SEA) | Soft robot | Hydraulic | Actuator unit 1 |
|---|---|---|---|---|---|
| Variable impedance | Good | Poor | Poor | Good | Good |
| Service life/ durability | Good | Poor | Poor | Good | Good |
| Availability of element part(s) | Good | Good | Good | Poor | Good |

Usage

The multi-fingered hands 15 each including the actuator unit 1 or 1A in accordance with Embodiment 3 or 4 are applicable not only to robot hands and multi-leg robots but also to other various purposes.

For example, the actuator unit 1 may be applied to a rehabilitation tool used for rehabilitation in a case where a person gets paralysis of his/her hand. With the rehabilitation tool, actual springs are connected to the fingers of a wearer, and the springs pull the fingers in a direction of opening the hand. The wearer repeatedly carries out operation of making a fist and opening the hand, as a training for recovery from the paralysis of the hand. By applying the actuator unit 1 to such a rehabilitation tool, the lengths and strengths of the springs can be changed by control.

Alternatively, the shock absorbing control of the actuator unit 1 may be applied to a door opening/closing device. This can enhance safety against an impact force acting on a door.

Further alternatively, the shock absorbing control of the actuator unit 1 may be applied to a drawer in a kitchen or the like in which a dangerous good(s) such as a knife can be housed. This can enhance safety against an impact force acting on the drawer.

A magnetic gear in accordance with an aspect of the present invention includes: a first magnetic pole array that includes first N poles and first S poles alternately arranged at given intervals along a circumferential direction of an outer peripheral surface of a rotary disc; and a second magnetic pole array that is arranged adjacent to the first magnetic pole array along the circumferential direction and that includes second N poles and second S poles alternately arranged at given intervals, one of the second N poles of the second magnetic pole array being positioned at a location corresponding to an intermediate position between a corresponding one of the first N poles and a corresponding one of the first S poles of the first magnetic pole array, the corresponding one of the first N poles and the corresponding one of the first S poles being adjacent to each other.

With this feature, one of the second N poles of the second magnetic pole array is positioned at a location corresponding to an intermediate position between a corresponding one of the first N poles and a corresponding one of the second S poles of the first magnetic pole array, the corresponding one of the first N poles and the corresponding one of the second S poles being adjacent to each other. Thus, the first N poles and the second N poles are arranged along a direction diagonal to the rotating shaft of the rotary disc, and the first S poles and the second S poles are arranged along the diagonal direction, whereby the magnetic gear is engaged with a counterpart magnetic gear. Consequently, the magnetic poles are engaged with each other in a larger engagement area, whereby a variation in the maximum transmission torque is reduced. As a result, it is possible to provide a magnetic gear which has a large transmission torque, stability, and a simple structure.

The magnetic gear in accordance with the aspect is preferably configured such that: the first N poles, the first S poles, the second N poles, and the second S poles each have a columnar shape, and are buried in the outer peripheral surface along their respective axial directions.

With the above feature, processing for burying the first N poles, the first S poles, the second N poles, and the second S poles in the outer peripheral surface of the rotary disc is facilitated.

The magnetic gear in accordance with the aspect is preferably configured such that: the rotary disc is in form of a truncated cone; the first magnetic pole array and the second magnetic pole array are arranged on an outer peripheral inclined surface of the rotary disc that is in form of the truncated cone; and the magnetic gear is a bevel gear.

With the above feature, it is possible to provide a compact actuator unit including a magnetic gear.

The magnetic gear in accordance with the aspect is preferably configured such that: the rotary disc is made of an aluminum material or a resin material.

With the above feature, it is possible to provide a magnetic gear that is quite light in weight.

A magnetic gear in accordance with another aspect of the present invention includes: a plurality of magnet units arranged along a circumferential direction of an outer peripheral surface of a rotary disc, each of the plurality of magnet units including a plurality of magnets arranged in a Halbach array with which directions of magnetic poles are optimized so as to strengthen a magnetic field strength on an outer side of the outer peripheral surface.

With the above feature, the plurality of magnets in each magnet unit are arranged in a Halbach array with which directions of the magnetic poles are optimized so as to strengthen a magnetic field strength on an outer side of the outer peripheral inclined surface of the rotary disc. This can significantly increase the magnetic force only in a direction extending outwardly from the outer peripheral surface, which is necessary for torque transmission. As a result, it is possible to increase the transmission torque of the magnetic gear.

The magnetic gear in accordance with the another aspect of the present invention is preferably configured such that: each of the plurality of magnet units is in form of a rectangular parallelepiped, and is bonded to the outer peripheral surface.

With the above feature, a Halbach array can be easily achieved.

The magnetic gear in accordance with the another aspect of the present invention is preferably configured such that: the rotary disc is in form of a truncated cone; the plurality of magnet units are arranged on an outer peripheral inclined surface of the rotary disc that is in form of the truncated cone; and the magnetic gear is a bevel gear.

With the above configuration, it is possible to provide a compact actuator unit including a magnetic gear.

The magnetic gear in accordance with the another aspect is preferably configured such that: the rotary disc is made of an aluminum material or a resin material.

With the above feature, it is possible to provide a magnetic gear that is quite light in weight.

The magnetic gear in accordance with the another aspect is preferably configured such that: the plurality of magnet units are arranged along a direction diagonal to a rotating shaft of the rotary disc as viewed in a direction intersecting with the rotating shaft.

With the above configuration, the magnetic poles are engaged with each other in a larger engagement area, whereby a variation in the maximum transmission torque is reduced. This gives smooth rotation.

An actuator unit in accordance with an aspect of the present invention includes: a motor; a first magnetic gear connected to a rotating shaft of the motor; a second magnetic gear configured to be magnetically engaged with the first magnetic gear; and a planetary reducer connected to a rotating shaft of the second magnetic gear, each of the first magnetic gear and the second magnetic gear being a magnetic gear in accordance with the aspect of the present invention or a magnetic gear in accordance with the another aspect of the present invention.

With the above feature, a torque that is generated by the motor and is then output from the planetary reducer is transmitted through the first magnetic gear and the second magnetic gear in a non-contact manner. As a result, it is possible to provide an actuator unit that can achieve a high torque and low friction.

The actuator unit in accordance with the aspect of the present invention is preferably configured such that: the motor includes an encoder configured to measure an amount of reverse rotation of the rotating shaft of the motor, the reverse rotation occurring when an external force torque acts on an output shaft of the planetary reducer; the actuator unit further includes a control circuit configured to control, in accordance with the amount of the reverse rotation measured by the encoder, the motor so as to absorb an impact torque acting on the output shaft of the planetary reducer; and the control circuit is further configured to control the motor so as to compensate a cogging torque generated at a timing of switching of magnetic poles of the first magnetic gear and the second magnetic gear engaged with each other.

With the above feature, it is possible (i) to detect an external force torque acting on the output shaft of the planetary reducer, (ii) to realize the shock absorbing control (Maxwell model control) only by servo control without using an external sensor, and (iii) to employ magnetic gears with a large torque as the first and second magnetic gears.

A link mechanism in accordance with an aspect of the present invention includes: a first link; a first joint connected to one end of the first link; a second joint connected to the other end of the first link; and a second link having one end connected to the second joint, each of the first joint and the second joint including an actuator unit in accordance with the aspect of the present invention.

With the above configuration, it is possible to reduce the frictions of the first joint and the second joint to a quite low level.

The link mechanism in accordance with the aspect of the present invention preferably further includes: a control circuit configured to carry out (i) a damping control for the actuator unit of the first joint so that a force of a virtual damper acts on the other end of the second link and (ii) a compliance control for the actuator unit of the second joint so that a force of a virtual spring acts on the other end of the second link.

With the above configuration, the link mechanism can catch an object while absorbing a shock.

The link mechanism in accordance with the aspect of the present invention preferably further includes: a third link; a third joint connected to one end of the third link; a fourth joint connected to the other end of the third link; and a fourth link having one end connected to the fourth joint, each of the third joint and the fourth joint including an actuator unit recited in claim 10, wherein the link mechanism further includes a control circuit configured to execute, in order to grasp a target object with a small shock, (i) a first phase that carries out a damping control for the first joint and carries out a compliance control for the second joint, (ii) a second phase that carries out a position control for the third joint and

**EP 4 177 495 A1**

causes the fourth joint to get closer to the target object, and (iii) a third phase that carries out a position control for the first joint and carries out a position control for the third joint so that a variation occurring in a virtual spring as a result of a compliance control for the fourth joint becomes constant, the first phase, the second phase, and the third phase being executed in this order.

With the above configuration, thanks to a combination of high backdrivability of the multi-fingered hand and the shock absorbing control, it is possible to realize a high-speed, seamless grasping operation and to reduce an impact force occurring in the grasping operation.

The link mechanism in accordance with the aspect of the present invention preferably further includes: a third link; a third joint connected to one end of the third link; a fourth joint connected to the other end of the third link; and a fourth link having one end connected to the fourth joint, each of the third joint and the fourth joint including an actuator unit recited in claim 10, wherein the link mechanism further includes a control circuit configured to carry out, in order to grasp a target object with a small shock, a damping control for the first joint and a compliance control for the second joint as well as an angle control for the third joint and a compliance control for the fourth joint and then to control the first to fourth joints by a model constructed by a virtual spring and a virtual damper connected in parallel.

With the above configuration, it is possible to grasp an object on a desk with a small shock and nonstop at a high speed.

The present invention is not limited to the embodiments, but can be altered by a skilled person in the art within the scope of the claims. The present invention also encompasses, in its technical scope, any embodiment derived by combining technical means disclosed in differing embodiments.

Reference Signs List

1: actuator unit
2: direct drive motor (motor)
3: first magnetic gear
4: second magnetic gear
5: planetary reducer
6: rotating shaft
7: encoder
8: output shaft
9: control circuit
10: first finger (link mechanism)
11: first link
12: PIP joint (first joint)
13: DIP joint (second joint)
14: second link
15: multi-fingered hand (link mechanism)
16: second finger (link mechanism)
17: third link
18: PIP joint (third joint)
19: DIP joint (fourth joint)
20: fourth link
21: object (target object)
30: magnetic gear
31: rotary disc
32: outer peripheral inclined surface (outer peripheral surface)
33: rotating shaft
34: first magnetic pole array
35: first N pole
36: first S pole
37: second magnetic pole array
38: second N pole
39: second S pole
40: magnet unit
41: magnet

**Claims**

1. A magnetic gear, comprising:

    a first magnetic pole array that includes first N poles and first S poles alternately arranged at given intervals along a circumferential direction of an outer peripheral surface of a rotary disc; and
    a second magnetic pole array that is arranged adjacent to the first magnetic pole array along the circumferential direction and that includes second N poles and second S poles alternately arranged at given intervals,
    one of the second N poles of the second magnetic pole array being positioned at a location corresponding to an intermediate position between a corresponding one of the first N poles and a corresponding one of the first S poles of the first magnetic pole array, the corresponding one of the first N poles and the corresponding one of the first S poles being adjacent to each other.

2. The magnetic gear as set forth in claim 1, wherein:
    the first N poles, the first S poles, the second N poles, and the second S poles each have a columnar shape, and are buried in the outer peripheral surface along their respective axial directions.

3. The magnetic gear as set forth in claim 1, wherein:

    the rotary disc is in form of a truncated cone;
    the first magnetic pole array and the second magnetic pole array are arranged on an outer peripheral inclined surface of the rotary disc that is in form of the truncated cone; and
    the magnetic gear is a bevel gear.

4. The magnetic gear as set forth in claim 1, wherein:
    the rotary disc is made of an aluminum material or a resin material.

5. A magnetic gear, comprising:

    a plurality of magnet units arranged along a circumferential direction of an outer peripheral surface of a rotary disc, each of the plurality of magnet units including a plurality of magnets arranged in a Halbach array with which directions of magnetic poles are optimized so as to strengthen a magnetic field strength on an outer side of the outer peripheral surface.

6. The magnetic gear as set forth in claim 5, wherein:
    each of the plurality of magnet units is in form of a rectangular parallelepiped, and is bonded to the outer peripheral surface.

7. The magnetic gear as set forth in claim 5, wherein:

    the rotary disc is in form of a truncated cone;
    the plurality of magnet units are arranged on an outer peripheral inclined surface of the rotary disc that is in form of the truncated cone; and
    the magnetic gear is a bevel gear.

8. The magnetic gear as set forth in claim 5, wherein:
    the rotary disc is made of an aluminum material or a resin material.

9. The magnetic gear as set forth in claim 7, wherein:
    the plurality of magnet units are arranged along a direction diagonal to a rotating shaft of the rotary disc as viewed in a direction intersecting with the rotating shaft.

10. An actuator unit, comprising:

    a motor;
    a first magnetic gear connected to a rotating shaft of the motor;
    a second magnetic gear configured to be magnetically engaged with the first magnetic gear; and
    a planetary reducer connected to a rotating shaft of the second magnetic gear,

each of the first magnetic gear and the second magnetic gear being a magnetic gear recited in claim 1 or 5.

11. The actuator unit as set forth in claim 10, wherein:

the motor includes an encoder configured to measure an amount of reverse rotation of the rotating shaft of the motor, the reverse rotation occurring when an external force torque acts on an output shaft of the planetary reducer;
the actuator unit further comprises a control circuit configured to control, in accordance with the amount of the reverse rotation measured by the encoder, the motor so as to absorb an impact torque acting on the output shaft of the planetary reducer; and
the control circuit is further configured to control the motor so as to compensate a cogging torque generated at a timing of switching of magnetic poles of the first magnetic gear and the second magnetic gear engaged with each other.

12. A link mechanism, comprising:

a first link;
a first joint connected to one end of the first link;
a second joint connected to the other end of the first link; and
a second link having one end connected to the second joint,
each of the first joint and the second joint including an actuator unit recited in claim 10.

13. The link mechanism as set forth in claim 12, further comprising:
a control circuit configured to carry out (i) a damping control for the actuator unit of the first joint so that a force of a virtual damper acts on the other end of the second link and (ii) a compliance control for the actuator unit of the second joint so that a force of a virtual spring acts on the other end of the second link.

14. The link mechanism as set forth in claim 12, further comprising:

a third link;
a third joint connected to one end of the third link;
a fourth joint connected to the other end of the third link; and
a fourth link having one end connected to the fourth joint,
each of the third joint and the fourth joint including an actuator unit recited in claim 10, wherein
the link mechanism further comprises a control circuit configured to execute, in order to grasp a target object with a small shock, (i) a first phase that carries out a damping control for the first joint and carries out a compliance control for the second joint, (ii) a second phase that carries out a position control for the third joint and causes the fourth joint to get closer to the target object, and (iii) a third phase that carries out a position control for the first joint and carries out a position control for the third joint so that a variation occurring in a virtual spring as a result of a compliance control for the fourth joint becomes constant, the first phase, the second phase, and the third phase being executed in this order.

15. The link mechanism as set forth in claim 12, further comprising:

a third link;
a third joint connected to one end of the third link;
a fourth joint connected to the other end of the third link; and
a fourth link having one end connected to the fourth joint,
each of the third joint and the fourth joint including an actuator unit recited in claim 10, wherein
the link mechanism further comprises a control circuit configured to carry out, in order to grasp a target object with a small shock, a damping control for the first joint and a compliance control for the second joint as well as an angle control for the third joint and a compliance control for the fourth joint and then to control the first to fourth joints by a model constructed by a virtual spring and a virtual damper connected in parallel.

FIG. 1

FIG. 2

FIG. 3

FIG. 4

N-S ARRAY

FIG. 5

## FIG. 6

## FIG. 7

FIG. 8

FIG. 9

## FIG. 10

## FIG. 11

## FIG. 12

HALBACH ARRAY

## FIG. 13

N-S ARRAY

FIG. 14

FIG. 15

FIG. 16

FIG. 17

FIG. 18

## FIG. 19

## FIG. 20

# FIG. 21

# FIG. 22

FIG. 23

FIG. 24

EP 4 177 495 A1

FIG. 25

FIG. 26

FIG. 27

TARGET OBJECT

FIG. 28

TARGET OBJECT

FIG. 29

FIG. 30

FIG. 31

FIG. 32

$$\tau_1 = K_g(F_{ref} - F_{spring})$$

FIG. 33

## FIG. 34

## FIG. 35

## FIG. 36

if $F_{spring} > th$

$\theta_1$ stop

18(1·1A)

17

19(1·1A)

20

16

Angle control

$\theta_1$

$\theta_2$

stiffness control

$F_{spring}$

$\theta_2$ initial angle-based

virtual damper

virtual spring

fingertip

## FIG. 37

12(1·1A)

11

13(1·1A)

14

10

$\theta_1$ initial angle-based

$\theta_1$

$\theta_2$

$\theta_2$ initial angle-based

virtual damper

virtual spring

fingertip

## INTERNATIONAL SEARCH REPORT

| | International application No. |
|---|---|
| | PCT/JP2021/025462 |

**A. CLASSIFICATION OF SUBJECT MATTER**
F16H 49/00(2006.01)i; B25J 15/08(2006.01)i; F16H 21/50(2006.01)i
FI: F16H49/00 A; F16H21/50; B25J15/08 J

According to International Patent Classification (IPC) or to both national classification and IPC

**B. FIELDS SEARCHED**

Minimum documentation searched (classification system followed by classification symbols)
F16H49/00; B25J15/08; F16H21/50

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-209963 A (RAILWAY TECHNICAL RESEARCH INSTITUTE) 24 September 2010 (2010-09-24) paragraphs [0018]-[0027], fig. 1-4 | 5 |
| Y | paragraphs [0018]-[0027], fig. 1-4 | 6-9 |
| A | paragraphs [0018]-[0027], fig. 1-4 | 1-4, 10-15 |
| Y | JP 4885247 B2 (SAWAIRI ENGINEERING KK) 29 February 2012 (2012-02-29) paragraphs [0015]-[0023], fig. 1-6 | 6-9 |
| A | paragraphs [0015]-[0023], fig. 1-6 | 1-5, 10-15 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 September 2021 (09.09.2021) | 21 September 2021 (21.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/025462

| Patent Documents referred in the Report | Publication Date | Patent Family | Publication Date |
|---|---|---|---|
| JP 2010-209963 A | 24 Sep. 2010 | (Family: none) | |
| JP 4885247 B2 | 29 Feb. 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018189221 A
- JP 4885247 B
- JP 3942101 B
- US 10224798 B